# EUROPEAN PATENT APPLICATION

(11) **EP 4 414 322 A1**
(43) Date of publication of application: **14.08.2024**
(21) Application number: 22900558.2
(22) Date of filing: 30.11.2022
(51) Int. Cl.: C01B 13/02

(54) **OXYGEN GENERATOR**

(30) Priority: 02.12.2021 CN 202111474251; 02.12.2021 CN 202123026678 U; 13.12.2021 CN 202111519084; 16.12.2021 CN 202111545725; 27.04.2022 CN 202221073742 U; 27.04.2022 CN 202221073579 U
(71) Applicant: BMC (Tianjin) Medical Co., Ltd., Tianjin 301700 (CN)
(72) Inventor: ZHANG, Yantao, Tianjin 301700 (CN); HE, Wei, Tianjin 301700 (CN); GAO, Zheliang, Tianjin 301700 (CN); YU, Shuqiang, Tianjin 301700 (CN); LIU, Changrui, Tianjin 301700 (CN); ZHUANG, Zhi, Tianjin 301700 (CN)
(74) Representative: Grünecker Patent- und Rechtsanwälte PartG mbB
(86) International application number: PCT/CN2022/135601
(87) International publication number: WO 2023/098754

(57) **Abstract**

An oxygen generator, comprising an adsorption tower (20) and an exhaust silencer (10), wherein the adsorption tower (20) has a loading cavity for loading a molecular sieve, and a nitrogen exhaust port in communication with the filling cavity; the exhaust silencer (10) has a gas inlet and a gas outlet, the gas inlet being in communication with the nitrogen exhaust port; and the exhaust silencer (10) is configured to only allow a gas to flow unidirectionally from the gas inlet to the gas outlet. In the oxygen generator, the exhaust silencer (10) is arranged at the nitrogen exhaust port of the adsorption tower (20), and the exhaust silencer (10) is configured to only allow a gas to flow unidirectionally from the gas inlet to the gas outlet, such that aerodynamic noise generated when nitrogen is discharged from the nitrogen exhaust port can be reduced, and the molecular sieve in the adsorption tower (20) can be completely isolated from outside air, which prevents the outside air from flowing from the gas outlet to the gas inlet and then entering the adsorption tower (20) to be in contact with the molecular sieve, causing deactivation of the molecular sieve.

## Description

### CROSS REFERENCES TO RELATED APPLICATIONS

The present disclosure claims priority to the Chinese patent application No. 202123026678.1, entitled "OXYGEN GENERATOR" filed to the China National Intellectual Property Administration (CNIPA) on December 02, 2021, the Chinese patent application No. 202111474251.X, entitled "EXHAUST MUFFLER AND OXYGEN GENERATOR" filed to the CNIPA on December 02, 2021, the Chinese patent application No. 202111519084.6, entitled "CONTROL METHOD, CONTROL DEVICE AND CONTROL SYSTEM OF OXYGEN GENERATION EQUIPMENT" filed to the CNIPA on December 13, 2021, the Chinese patent application No. 202111545725.5, entitled "CONTROL METHOD AND CONTROL DEVICE OF AIR COMPRESSOR AND OXYGEN GENERATOR" filed to the CNIPA on December 16, 2021, the Chinese patent application No. 202221073579.0, entitled "MOLECULAR SIEVE OXYGEN GENERATOR" filed to the CNIPA on April 27, 2022, and the Chinese patent application No 202221073742.3, entitled "ADSORPTION TOWER AND MOLECULAR SIEVE OXYGENERATOR" filed to the CNIPA on April 27, 2022, the entire contents of which are incorporated herein by reference.

### TECHNICAL FIELD

The disclosure relates to the technical field of oxygen generation, in particular to an oxygen generator.

### BACKGROUND

Oxygen is an essential substance for maintaining human life. However, in certain special circumstances, people have to face environments lacking oxygen or require higher concentrations of oxygen. Based on such demands, oxygen generators have emerged. At present, there are three relatively mature oxygen generation processes: the chemical reagent method, the cryogenic method, and the pressure swing adsorption method.

The medical molecular sieve oxygen generator takes zeolite molecular sieve as the adsorbent, utilizes the air as a raw material through Pressure Swing Adsorption (PSA) technology at a room temperature and a low pressure, to separate oxygen from air by a physical method, thereby generating high-purity medical oxygen, and the concentration of the isolated oxygen is 90%-96%. The medical molecular sieve oxygen generator has advantages of safe, reliable, convenient use, economical and long-term continuous oxygen supplying, and thus can easily replace the traditional bottled oxygen and chemical oxygen generation and has been widely used.

However, the existing molecular sieve oxygen generators lack effective protection against the core isolating component (the molecular sieve), especially in the storage or shutdown state of the oxygen generator, the outside air can enter through the nitrogen exhaust port of the oxygen generator and come into contact with the molecular sieve, and the long-term contact of the molecular sieve with the air will absorb the water vapor in the air and cause the deactivation of the molecular sieve, ultimately affecting the oxygen generation effect. In addition, nitrogen exhaust through the nitrogen exhaust port also tends to generate aerodynamic noise, thereby affecting the oxygen generator's use experience.

### SUMMARY

It is an object of the disclosure to provide an oxygen generator to solve the problems described above.

In order to achieve the above object, the disclosure provides an oxygen generator including an adsorption tower and an exhaust muffler. The adsorption tower includes a filling chamber for filling a molecular sieve, and a nitrogen exhaust port in communication with the filling chamber. The exhaust muffler includes a gas inlet and a gas outlet, and the gas inlet is in communication with the nitrogen exhaust port; and the exhaust muffler is configured to only allow a gas to flow unidirectionally from the gas inlet to the gas outlet.

Optionally, the exhaust muffler includes a muting housing and a check valve assembly; the muting housing includes a cavity; the gas inlet and the gas outlet are provided on the muting housing and in communication with the cavity; the check valve assembly is mounted in the cavity and in unidirectional communication with the gas inlet and the gas outlet to allow the gas to only unidirectionally flow from the gas inlet to the gas outlet.

Optionally, the check valve assembly includes a check valve core and a check valve housing; the check valve housing is formed with a gas passage for communicating the gas inlet and the gas outlet; the check valve core is disposed in the gas passage, and is configured to move in a forward direction to unblock the gas passage under gas pressure from the gas inlet and move in a reverse direction to block the gas passage when the gas pressure is lost.

Optionally, the check valve assembly further includes an elastic member, and the check valve core is movably disposed in the gas passage, and configured to move in a forward direction under gas pressure from the gas inlet to unblock the gas passage and in a reverse direction under a restoring force of the elastic member to block the gas passage when the gas pressure is lost.

Optionally, one end of the check valve core includes a plug and the other end includes a mounting groove for mounting the elastic member, and the gas passage is provided with a vent for matching the plug to block the gas passage and a stopper for stopping the elastic member at an opposite side of the check valve core to compress the elastic member when the check valve core moves in the forward direction.

Optionally, the check valve housing includes an inlet end housing and an outlet end housing, the inlet end housing and the outlet end housing are detachably connected and together define the gas passage, the inlet end housing is provided with an entrance port communicating the gas inlet and the gas passage, and the outlet end housing is provided with an exit port communicating the gas outlet and the gas passage.

Optionally, the check valve assembly further includes an exhaust barrel; one end of the exhaust barrel is in a closed shape, and the other end of the exhaust barrel is in an opened shape; an open end of the exhaust barrel is connected to an outlet end of the gas passage, and an exhaust hole is provided on a barrel wall of the exhaust barrel.

Optionally, the muting housing includes a barrel and two end covers respectively covering both ends of the barrel, one of the end covers is provided with the gas inlet and is served as an inlet end cover and the other end cover is provided with the gas outlet and is served as an outlet end cover.

Optionally, the check valve assembly is arranged coaxially with the barrel.

Optionally, the gas inlet includes an inlet through hole formed at the center of the inlet end cover, and the gas outlet includes a plurality of outlet through holes formed at the outlet end cover and arranged at intervals along the circumference of the outlet end cover.

Optionally, the exhaust muffler includes soundproof sponge, and the soundproof sponge is filled in the cavity and is provided with a mounting cavity for mounting the check valve assembly.

Optionally, the exhaust muffler includes an inlet spigot joint, and the inlet spigot joint is mounted at the air inlet.

Optionally, the oxygen generator further includes an inlet filter, an inlet muffler, an air compressor that are in sequential communication with each other, and an oxygen storage tank, an oxygen filter, and a humidification cup that are in sequential communication with each other. The adsorption tower includes a gas inlet and an oxygen exhaust port in communication with the filling chamber; an air discharge port of the air compressor is in communication with the gas inlet, and an oxygen inlet of the oxygen storage tank is in communication with the oxygen exhaust port.

The oxygen generator of the disclosure adopts the above-mentioned solution, the exhaust muffler is arranged at the nitrogen exhaust port of the adsorption tower, and the exhaust muffler is configured to only allow a gas to flow unidirectionally from the gas inlet to the gas outlet, such that aerodynamic noise generated when nitrogen is discharged from the nitrogen exhaust port can be reduced, and the molecular sieve in the adsorption tower can be completely isolated from outside air, which prevents the outside air from flowing from the gas outlet to the gas inlet and then entering the adsorption tower to be in contact with the molecular sieve, causing deactivation of the molecular sieve.

An object of the disclosure is to provide an exhaust muffler and an oxygen generator including the same.

In order to achieve the above object, the disclosure provides, in one aspect, an exhaust muffler including a muting housing and a check valve assembly; the muting housing includes a cavity, a gas inlet and a gas outlet both in communication with the cavity; the check valve assembly is mounted within the cavity and in unidirectional communication with the gas inlet and the gas outlet to allow the gas to only unidirectionally flow from the gas inlet to the air outlet.

Optionally, the check valve assembly includes a check valve core and a check valve housing; the check valve housing is formed with a gas passage for communicating the gas inlet and the gas outlet; the check valve core is provided in the gas passage and is movable in a forward direction to unblock the gas passage under gas pressure from the gas inlet and in a reverse direction to block the gas passage when the gas pressure is lost.

Optionally, the check valve assembly further includes an elastic member, and the check valve core is movably provided in the gas passage and movable in a forward direction under gas pressure from the gas inlet to unblock the gas passage and in a reverse direction under a restoring force of the elastic member to block the gas passage when the gas pressure is lost.

Optionally, one end of the check valve core includes a plug and the other end includes a mounting groove for mounting the elastic member, and the gas passage is provided with a vent for matching with the plug to unblock the gas passage and a stopper for stopping the elastic member at an opposite side of the check valve core to compress the elastic member when the check valve core moves in the forward direction.

Optionally, the check valve housing includes an inlet end housing and an outlet end housing, the inlet end housing and the outlet end housing are detachably connected and together define the gas passage, the inlet end housing is provided with an entrance port communicating the gas inlet and the gas passage, and the outlet end cover is provided with an exit port communicating the gas outlet and the gas passage.

Optionally, the check valve assembly further includes an exhaust barrel; one end of the exhaust barrel is in a closed shape and the other end is in an opened shape; the open end of the exhaust barrel is connected to the outlet end of the gas passage, and an exhaust hole is provided on a barrel wall of the exhaust barrel.

Optionally, the muting housing includes a barrel and two end covers respectively covering both ends of the barrel, wherein one end cover is provided with the gas inlet and formed as an inlet end cover, and the other end cover is provided with the gas outlet and formed as an outlet end cover.

Optionally, the gas inlet includes an inlet through hole formed at the center of the inlet end cover, and the gas outlet includes a plurality of outlet through holes formed in the outlet end cover and arranged at intervals along the circumference of the outlet end cover.

Optionally, the exhaust muffler includes soundproof sponge, and the soundproof sponge is filled in the cavity and is provided with a mounting cavity for mounting the check valve assembly.

Optionally, the exhaust muffler includes an inlet spigot joint, and the inlet spigot joint is mounted at the gas inlet.

According to another aspect of the disclosure, provided is an oxygen generator including an exhaust muffler as hereinbefore described.

Optionally, the oxygen generator further includes a molecular sieve adsorption tower, and the molecular sieve adsorption tower includes a nitrogen exhaust port, and the gas inlet of the exhaust muffler is in communication with the nitrogen exhaust port.

By adopting the above-mentioned solution, the exhaust muffler of the disclosure is provided with the check valve assembly in the muting housing to realize a unidirectional flow of gas from the gas inlet to the gas outlet. When the exhaust muffler is applied to an oxygen generator, the molecular sieve in the adsorption tower of the oxygen generator can be completely separated from the outside air, which prevents the outside air from flowing from the gas outlet to the gas inlet and then entering the adsorption tower to be in contact with the molecular sieve, causing deactivation of the molecular sieve.

In an embodiment of the disclosure, provided is a molecular sieve oxygen generator for solving the technical problems of a complicated assembly process and poor air tightness between a molecular sieve tank and a second oxygen storage tank.

The disclosure provides a molecular sieve oxygen generator, including a first sieve tank, a second oxygen storage tank, and an airway assembly, wherein a first open end of the first sieve tank is configured to introduce a raw material gas, a second open end is in communication with the second oxygen storage tank, and the airway assembly is connected to the second open end and the second oxygen storage tank to form a first oxygen discharge passage for communicating the first sieve tank and the second oxygen storage tank.

The airway assembly includes a lower end cover and a gas distribution plate, wherein the lower end cover is in tight coupling with the second open end of the first sieve tank, and the gas distribution plate is arranged on a side of the lower end cover facing away from the first sieve tank to form the first oxygen discharge passage.

Optionally, the molecular sieve oxygen generator further includes a second sieve tank, wherein a first open end of the second sieve tank is in communication with the exhaust port, and a second open end is in tight coupling with the lower end cover.

The airway assembly further includes a pressure equalizing pipe and a pressure equalizing valve, wherein one end of the pressure equalizing pipe is in communication with the first oxygen discharge passage, and the other end is in communication with the second open end of the second sieve tank; the pressure equalizing valve is provided on the pressure equalizing pipe to control the unblocking/blocking of the pressure equalizing pipe.

Optionally, an exhaust check valve is provided between the exhaust port and the second sieve tank, the exhaust check valve preventing gas from flowing from the exhaust port to the second sieve tank.

Optionally, a first exhaust muffler is provided at the exhaust port, and the first exhaust muffler and the exhaust check valve are of an integral structure.

The first exhaust muffler includes a muffler barrel, a first inlet end cover and an exhaust end cover arranged at two ends of the muffler barrel, a soundproof sponge arranged in the muffler barrel, an exhaust check valve, and a muffler inner core.

Optionally, a first joint and a second joint are provided on the gas distribution plate, and the pressure equalizing pipe is in communication with the first oxygen discharge passage via the first joint and is in communication with the second open end of the second sieve tank via the second joint.

The first joint and/or the second joint are of an integral structure with the gas distribution plate.

Optionally, the airway assembly further includes a cleaning pipeline, wherein one end of the cleaning pipeline is in communication with the oxygen discharge passage and the other end is in communication with the second open end of the second sieve tank.

A throttle bridge is provided in the cleaning pipeline to generate a purge gas stream that is blown into the second sieve tank.

Optionally, a second oxygen discharge passage is further provided in the airway assembly, wherein one end of the second oxygen discharge passage is in communication with the second sieve tank, and the other end is in communication with the second oxygen storage tank.

A check valve is provided in the second oxygen discharge passage, and the check valve prevents gas from flowing from the second oxygen storage tank to the second sieve tank.

Optionally, the first oxygen discharge passage is in communication with the second oxygen storage tank through the check valve, and the check valve also serves to prevent gas from flowing from the second oxygen storage tank to the first sieve tank.

Optionally, the lower end cover is provided with a third joint in communication with the oxygen discharge passage, and the second oxygen storage tank is mounted on the lower end cover and is in communication with the oxygen discharge passage through the third joint.

Optionally, the molecular sieve oxygen generator further includes a first control valve, wherein the first control valve is connected to each of the first open end of the first sieve tank, the first open end of the second sieve tank, and the air inlet.

When the first control valve is in the second state, the first open end of the first sieve tank and the first open end of the second sieve tank both are in communication with the air inlet.

The disclosure provides a molecular sieve oxygen generator further including an outer housing and an inlet filtering window, an inlet filter, an inlet muffler, a compressor, and a molecular sieve tank assembly connected in sequence.

A denoise box is provided in the outer housing. The denoise box includes a denoise outer housing and a denoise base. The compressor is connected to the denoise base via a damping member. The inlet muffler and the first exhaust muffler are provided in the denoise box. The inlet muffler is configured to reduce the inlet sound of the compressor during operation.

Optionally, an inner wall of the denoise outer housing is provided with a denoise sponge.

Optionally, a heat dissipation fan is provided above the denoise outer housing, and a gas outlet of the heat dissipation fan is located opposite the compressor in the denoise box.

A mounting bracket for fixing the main board and the oxygen concentration sensor is mounted above the heat dissipation fan.

Optionally, the molecular sieve tank assembly includes an upper end cover, an upper sealing gasket, a spring, a sieve plate, a non-woven fabric, a first check valve, a first sieve tank, and a second sieve tank.

The first sieve tank and the second sieve tank are filled with a molecular sieve, and the spring presses the molecular sieve through the sieve plate and the non-woven fabric, thereby fixing the position of the molecular sieve.

The upper end cover is located at the upper end of the spring to stop the spring and block the upper end of the first sieve tank.

The upper sealing gasket is provided between the upper end cover and the first sieve tank.

The disclosure provides a molecular sieve oxygen generator further including a display device mounted on the outer housing and a first humidification cup. The display device is configured to display information for human-computer interaction with an operator. The first humidification cup is fastened by means of a humidification cup strap.

In the molecular sieve oxygen generator provided by the disclosure, a first oxygen discharge passage formed by fastening a lower end cover and a gas distribution plate is connected to a first sieve tank and a second oxygen storage tank. The connection points between the gas path joints and the lines are reduced, thus improving the gas tightness, compared with the connections between the gas path joints and the lines in the prior art. The difficulty of processing the oxygen discharge passage is reduced compared to the integrally formed oxygen discharge passage.

In view of the above problems, the disclosure is proposed to provide an adsorption tower and a molecular sieve oxygen generator that overcomes, or at least partially solves, the foregoing problems.

According to a first aspect of the disclosure, provided is an adsorption tower including:
a second control valve including a gas inlet end, an exhaust end, and two gas outlet ends;
a first molecular sieve tank having an inlet end in communication with one of the gas outlet ends;
a second molecular sieve tank having an inlet end in communication with another gas outlet end; wherein,
the inlet end of the first molecular sieve tank and the inlet end of the second molecular sieve tank are in communication under the control of the second control valve;
a gas distribution plate fixed to the first molecular sieve tank and the second molecular sieve tank and provided with a first oxygen passage in communication with the outlet end of the first molecular sieve tank and also provided with a second oxygen passage in communication with an outlet end of the second molecular sieve tank;
a first connection tube for communicating the first oxygen passage and the second oxygen passage; and
a first pressure equalizing valve provided in the first connection tube for regulating the unblocking/blocking between the first oxygen passage and the second oxygen passage.

Optionally, the gas distribution plate includes an integrated first spigot joint structure and second spigot joint structure; wherein
the first spigot joint structure is in communication with the first oxygen passage, the second spigot joint structure is in communication with the second oxygen, and the first spigot joint structure and the second spigot joint structure are in communication through the first connection tube.

Optionally, the adsorption tower further includes:
a third oxygen storage tank in communication with the first oxygen passage and second oxygen passage for storing oxygen produced by the first or second molecular sieve tanks.

Optionally, the gas distribution plate further includes an integrated third spigot joint structure and fourth spigot joint structure; wherein,
the third spigot joint structure is in communication with the first oxygen passage, the fourth spigot joint structure is in communication with the second oxygen passage, and the third spigot joint structure and the fourth spigot joint structure are in communication via the second connection tube; and,
at least one throttle bridge is provided in the second connection tube.

Optionally, the first connection tube and the second connection tube are made of medical grade material.

Optionally, the adsorption tower further includes:
a mounting clip fixed on the gas distribution plate for clipping the first pressure equalizing valve.

Optionally, the second control valve and the first pressure equalizing valve are solenoid valves.

Optionally, the outlet end of the first molecular sieve tank and the outlet end of the second molecular sieve tank are each provided with a check valve for preventing backflow of oxygen flowing out of the first molecular sieve tank and the second molecular sieve tank.

Optionally, the adsorption tower further includes:
a gas distribution sealing gasket provided on the first molecular sieve tank and the second molecular sieve tank, and the gas distribution plate is mounted on the gas distribution sealing gasket.

According to a second aspect of the disclosure, provided is also a molecular sieve oxygen generator including:
an adsorption tower as described in any preceding aspect.

Compared with the related art, the disclosure includes a second control valve, a first molecular sieve tank, a second molecular sieve tank, a gas distribution plate, a first connection tube, and a first pressure equalizing valve. The second control valve includes a gas inlet end, an exhaust end, and two gas outlet ends. The inlet end of the first molecular sieve tank is in communication with one gas outlet end, and the inlet end of the second molecular sieve tank is in communication with another gas outlet end. The inlet end of the first molecular sieve tank and the inlet end of the second molecular sieve tank are in communication under the control of the second control valve. The gas distribution plate is fixed to the first molecular sieve tank and the second molecular sieve tank, and is provided with a first oxygen passage in communication with the outlet end of the first molecular sieve tank, and is also provided with a second oxygen passage in communication with the outlet end of the second molecular sieve tank. The first connection tube communicates the first oxygen passage and the second oxygen passage. A first pressure equalizing valve is provided in the first connection tube for regulating the unblocking/blocking of the first oxygen passage and the second oxygen passage. In the process of oxygen generation, both the inlet end and the oxygen output end of the adsorption tower can be equalized to increase the gas pressure in the molecular sieve tank, so that the molecular sieve can rapidly adsorb nitrogen in a high gas pressure state to improve the oxygen generation efficiency.

An embodiment of the disclosure provides a control method, a control device, and a control system of oxygen generation equipment to solve the problem of how to control the gas pressure in the oxygen generation equipment to be maintained within a stable range and extend the service life of the oxygen generation equipment.

In a first aspect, an embodiment of the disclosure provides a method for controlling oxygen generation equipment applied to a control device. The control device is connected to the oxygen generation equipment, and the oxygen generation equipment includes a first oxygen storage tank, a first solenoid valve, and a second solenoid valve. The method includes:
acquiring an oxygen pressure in the first oxygen storage tank;
determining a first target control parameter corresponding to the first solenoid valve and/or determining a second target control parameter corresponding to the second solenoid valve in the case where the oxygen pressure exceeds a preset oxygen pressure range; wherein the first solenoid valve is configured to introduce air into the oxygen generation equipment and waste gas out of the oxygen generation equipment, and the second solenoid valve is configured to introduce oxygen into the first oxygen storage tank; and
regulating a first control parameter corresponding to the first solenoid valve to be the first target control parameter, and/or regulating a second control parameter corresponding to the second solenoid valve to be the second target control parameter, so that the oxygen pressure in the first oxygen storage tank is within the preset oxygen pressure range, wherein the first control parameter is an actual control parameter corresponding to the first solenoid valve, and the second control parameter is an actual control parameter corresponding to the second solenoid valve.

In a second aspect, an embodiment of the disclosure also provides a control device. The control device is connected to oxygen generation equipment, and the control device includes a controller and an oxygen pressure detection module connected with the controller, wherein the oxygen generation equipment includes a first oxygen storage tank, a first solenoid valve, and a second solenoid valve;
the oxygen pressure detection module is configured to acquire oxygen pressure in the first oxygen storage tank; and
the controller is configured to:
determine a first target control parameter corresponding to the first solenoid valve and/or determine a second target control parameter corresponding to the second solenoid valve in the case where the oxygen pressure exceeds a preset oxygen pressure range; and regulate a first control parameter corresponding to the first solenoid valve to be the first target control parameter, and/or regulate a second control parameter corresponding to the second solenoid valve to be the second target control parameter, so that the oxygen pressure in the first oxygen storage tank is within the preset oxygen pressure range, wherein the first control parameter is an actual control parameter corresponding to the first solenoid valve, and the second control parameter is an actual control parameter corresponding to the second solenoid valve.

The first solenoid valve is configured to introduce air into the oxygen generation equipment and waste gas out of the oxygen generation equipment, and the second solenoid valve is configured to introduce oxygen into the first oxygen storage tank.

In a third aspect, an embodiment of the disclosure also provides a control system of oxygen generation equipment. The system includes oxygen generation equipment, a control device, and a pressure sensor, wherein
the oxygen generation equipment includes a first solenoid valve, a second solenoid valve, and an oxygen storage tank; the first solenoid valve is configured to introduce air into the oxygen generation equipment and waste gas out of the oxygen generation equipment, and the second solenoid valve is configured to introduce oxygen into the first oxygen storage tank;
the control device includes a controller and an oxygen pressure detection module connected to the controller;
the pressure sensor is provided on the first oxygen storage tank and is connected to the oxygen pressure detection module; wherein
in the case where the oxygen pressure detection module detects that the oxygen pressure in the first oxygen storage tank exceeds a preset oxygen pressure range via the pressure sensor, the controller determines a first target control parameter corresponding to the first solenoid valve and/or determines a second target control parameter corresponding to the second solenoid valve; and regulates a first control parameter corresponding to the first solenoid valve to be the first target control parameter, and/or regulate a second control parameter corresponding to the second solenoid valve to be the second target control parameter, so that the oxygen pressure in the first oxygen storage tank is within the preset oxygen pressure range, wherein the first control parameter is an actual control parameter corresponding to the first solenoid valve, and the second control parameter is an actual control parameter corresponding to the second solenoid valve.

In a fourth aspect, an embodiment of the disclosure also provides a computer-readable storage medium storing a computer program which, when executed by a processor, performs the steps of the method for controlling oxygen generation equipment as described above.

The embodiments of the disclosure at least include the following technical effects:

According to the technical solution of an embodiment of the disclosure, in the case where the oxygen pressure in the first oxygen storage tank exceeds a preset oxygen pressure range, a control parameter corresponding to the first solenoid valve and/or the second solenoid valve is regulated so as to change the operating state of the first solenoid valve and/or the second solenoid valve so as to stabilize the oxygen pressure in the first oxygen storage tank within the preset oxygen pressure range, so that the gas pressure in the oxygen generation equipment fluctuates within the preset range, reducing the impact damage caused by the high-pressure gas to the oxygen generation equipment, and extending the service life of the oxygen generation equipment.

An embodiment of the disclosure provides a control method, control device, and an oxygen generator for an air compressor to solve the problem of how to start up the air compressor safely.

In a first aspect, an embodiment of the disclosure provides a control method of an air compressor applied to control device in an oxygen generator. The oxygen generator includes the air compressor and the control device, the air compressor is connected to the control device, and the method includes:
acquiring a voltage variation law corresponding to a power supply of the air compressor when a start-up instruction for starting up the air compressor is detected;
determining a target time interval for satisfying a safe start-up condition corresponding to the air compressor according to the voltage variation law; and
controlling the air compressor to start up at any time during the target time interval.

In a second aspect, an embodiment of the disclosure also provides control device. The control device is connected to an air compressor, and the control device includes:
a main control module, a control module and a detection module both connected to the main control module; wherein
the detection module is configured to detect a start-up instruction to start up the air compressor;
the main control module is configured to acquire, when the detection module detects the start-up instruction, a voltage variation law corresponding to a power supply of the air compressor, determine, according to said voltage variation law, a target time interval satisfying a safe start-up condition corresponding to the air compressor, and send a first control instruction to the control module; and
the control module is configured to control, upon receiving the first control instruction sent by the main control module, the air compressor to start up at any moment of the target time interval.

In a third aspect, an embodiment of the disclosure also provides an oxygen generator. The oxygen generator includes an air compressor and control device connected to the air compressor.

The control device includes a main control module, a detection module, and a control module both connected to the main control module; wherein
when the detection module detects a start-up instruction for starting up the air compressor, the main control module acquires a voltage variation law corresponding to a power supply of the air compressor, determines a target time interval satisfying a safe start-up condition corresponding to the air compressor according to the voltage variation law, and the control module controls the air compressor to start up at any time of the target time interval.

In a fourth aspect, an embodiment of the disclosure also provides a computer-readable storage medium storing a computer program that, when executed by a processor, implements the control method of the air compressor described above.

The embodiments of the disclosure at least include the following technical effects:

According to the technical solution of the disclosure, by acquiring a voltage variation law of a power supply corresponding to an air compressor when a starting instruction of the air compressor is detected, a target time interval for starting up the air compressor is determined, and the air compressor is controlled to start up at any time within the target time interval. It is possible to prevent the air compressor from starting up at the voltage peak position of the power supply, reducing the mechanical impact on the air compressor at the start-up moment and the impact on other equipment using the power supply, and extending the service life of the air compressor.

The above-mentioned description is merely an overview of the technical solutions of the present disclosure. In order to know about the technical means of the present disclosure more clearly and implement the solutions according to the contents of the specification, and in order to make the above-mentioned and other objectives, features and advantages of the present disclosure more apparent and understandable, specific implementations of the present disclosure are set forth below.

### BRIEF DESCRIPTION OF THE DRAWINGS

In order to describe the embodiments of the present disclosure more clearly, the accompanying drawings which are used in the description of the embodiments will be briefly introduced. Apparently, the accompanying drawings in the following description are merely some embodiments of the present disclosure, and those skilled in the art may obtain other accompanying drawings according to these accompanying drawings without paying any creative effort.
FIG. 1 is an exploded perspective view of an exhaust muffler according to an embodiment of the disclosure;
FIG. 2 is a cross-sectional view of an exhaust muffler according to according to an embodiment of the disclosure;
FIG. 3 is a schematic diagram of an oxygen generator according to according to an embodiment of the disclosure;
FIG. 4 is a flowchart illustrating a control method of an oxygen generation equipment provided in an embodiment of the disclosure;
FIG. 5 is a schematic structural diagram of a control device provided in an embodiment of the disclosure;
FIG. 6 is a schematic structural diagram I of a control system provided in an embodiment of the disclosure;
FIG. 7 is a schematic structural diagram II of a control system provided in an embodiment of the disclosure;
FIG. 8 is a schematic structural diagram III of a control system provided in an embodiment of the disclosure;
FIG. 9 is a flowchart illustrating a control method of an air compressor provided in an embodiment of the disclosure;
FIG. 10 is a schematic diagram illustrating a relationship between voltage state information of a power supply and an output voltage in a control method of an air compressor according to an embodiment of the disclosure;
FIG. 11 is a schematic structural diagram I of a control device provided in an embodiment of the disclosure;
FIG. 12 is a schematic structural diagram II of a control device provided in an embodiment of the disclosure;
FIG. 13 is a schematic structural diagram I of an oxygen generator provided in an embodiment of the disclosure;
FIG. 14 is a schematic structural diagram II of an oxygen generator provided in an embodiment of the disclosure;
FIG. 15 is a schematic structural diagram III of an oxygen generator provided in an embodiment of the disclosure;
FIG. 16 is an exploded view of a molecular sieve oxygen generator provided in an embodiment of the disclosure;
FIG. 17 is an exploded view of a molecular sieve tank assembly in an embodiment of a molecular sieve oxygen generator provided by the disclosure;
FIG. 18 is a bottom view of a molecular sieve tank assembly in an embodiment of a molecular sieve oxygen generator of the disclosure;
FIG. 19 is a cross-sectional view of a partial structure of a molecular sieve tank assembly in an embodiment of a molecular sieve oxygen generator of the disclosure;
FIG. 20 is an exploded view of a first exhaust muffler in an embodiment of a molecular sieve oxygen generator of the disclosure;
FIG. 21 is an exploded structural view of an adsorption tower provided in an embodiment of the disclosure;
FIG. 22 is a structural schematic diagram of a first portion of an adsorption tower provided in an embodiment of the disclosure; and
FIG. 23 is a structural schematic diagram of a second portion of an adsorption tower provided in an embodiment of the disclosure.

### Description of reference numbers

10-exhaust muffler; 11-muting housing; 111-barrel; 112-inlet end cover; 1121-inlet through hole; 1122-inlet tube; 113-outlet end cover; 1131-outlet through hole; 12-check valve assembly; 121-check valve core; 1211-plug; 1212-mounting groove; 122-gas passage; 1221-vent; 1222-stopper; 123-elastic member; 124-inlet end housing; 125-outlet end housing; 126-exhaust barrel; 1261-exhaust hole; 13-soundproof sponge; 131-mounting cavity; 14-inlet spigot joint; 20-adsorption tower; 201-control valve; 21-inlet filter; 22-inlet muffler; 23-air compressor; 24-oxygen storage tank; 241-pressure regulation valve; 25-oxygen filter; 26-humidification cup; 27-flowmeter; 28-check valve; 29-oxygen discharge spigot joint; 200-control device; 2201-controller; 202-oxygen pressure detection module; 203-oxygen flow rate detection module; 204-solenoid valve control module; 310-oxygen generation equipment; 320-pressure sensor; 330-flow rate sensor; 311-first solenoid valve; 312-second solenoid valve; 313-first oxygen storage tank; 314-outlet port; 315-inlet port; 316-waste gas exhaust port; 317-air compressor; 318-molecular sieve tower; 319-flow rate regulation assembly; 3310-control device; 3320-air compressor; 3311-main control module; 3312-control module; 3313-detection module; 3131-voltage acquisition unit; 3132-current acquisition unit; 3314-conversion module; 3330-power supply; 340-display screen; 350-speaker; 360-relay; 500-oxygen generator; 510-protection unit; 511-varistor; 512-discharge tube; 520-fuse; 411-front housing; 412-rear housing; 413-base; 414-upper housing; 15-caster; 421-denoise outer housing; 422-denoise base; 423-heat dissipation fan; 424-mounting bracket; 41-inlet filtering window; 42-inlet filter; 43-inlet muffler; 44-compressor; 45-damping member; 51-flow regulation device; 52-first humidification cup; 53-atomization spigot joint; 54-first oxygen discharge spigot joint; 60-first exhaust muffler; 61-muffler barrel; 62-first inlet end cover; 63-exhaust end cover; 64-soundproof sponge; 65-exhaust check valve; 66-muffler inner core; 71-main board; 72-oxygen concentration sensor; 73-display device; 100-molecular sieve tank assembly; 101-upper end cover; 102-upper sealing gasket; 111-first sieve tank; 112-spring; 113-sieve plate; 114-non-woven fabric; 121-second sieve tank; 130-second oxygen storage tank; 131-pressure regulation valve; 141-lower end cover; 142-gas distribution plate; 143-pressure equalizing pipe; 144-pressure equalizing valve; 145-pressure equalizing valve mounting holder; 146-end cover sealing gasket; 147-first check valve; 148-gas distribution plate sealing gasket; 150-first control valve; 1, second control valve; 2, first molecular sieve tank; 3, second molecular sieve tank; 4, gas distribution plate; 5, first connection tube; 6, first pressure equalizing valve; 7, third oxygen storage tank; 8, throttle bridge; 9, mounting clip; 610, second check valve; 611, gas distribution sealing gasket; 612, second inlet end cover; 613, first outlet end cover; 614, first sieve plate; and 615, second connection tube.

### DETAILED DESCRIPTION OF THE EMBODIMENTS

Hereinafter, specific embodiments of the disclosure will be described in detail in conjunction with the figures. It should be understood that the detailed embodiments described herein are illustrative and explanatory only and are not restrictive of the disclosure.

In the disclosure, unless otherwise specified, the directional words used such as "inside" and "outside" refer to the inside and outside relative to the contour of each component itself.

Oxygen is an essential substance for maintaining human life. However, in certain special circumstances, people have to face environments lacking oxygen or require higher concentrations of oxygen. Based on such demands, oxygen generators have emerged. At present, there are three relatively mature oxygen generation processes: the chemical reagent method, the cryogenic method, and the pressure swing adsorption method.

The medical molecular sieve oxygen generator takes zeolite molecular sieve as the adsorbent, utilizes the air as a raw material through Pressure Swing Adsorption (PSA) technology at a room temperature and a low pressure, to separate oxygen from the air by a physical method, thereby generating high-purity medical oxygen, and the concentration of the isolated oxygen is 90%-96%. The medical molecular sieve oxygen generator has advantages of being safe, reliable, convenient use, economical and long-term continuous oxygen supplying, and thus can easily replace the traditional bottled oxygen and chemical oxygen generation and has been widely used.

However, the existing molecular sieve oxygen generators lack effective protection against the core isolating component (the molecular sieve), especially in the storage or shutdown state of the oxygen generator. Specifically, the adsorption tower provided with the molecular sieve has a nitrogen exhaust port. The nitrogen exhaust port is connected with an exhaust muffler, and the nitrogen gas discharged through the nitrogen exhaust port is discharged into the air through the exhaust muffler. The exhaust muffler has a simple structure and is generally composed of a muting housing and soundproof sponge filled in the muting housing. The muting housing is provided with a gas inlet and a gas outlet, and the gas inlet is connected to the nitrogen exhaust port. In the state of storage or shutdown of the oxygen generator, the outside air can enter the adsorption tower through the gas outlet of the exhaust muffler, the air inlet, and the nitrogen exhaust port of the adsorption tower in turn and come into contact with the molecular sieve. The long-term contact of the molecular sieve with the air will absorb the water vapor in the air and cause the deactivation of the molecular sieve, ultimately affecting the oxygen generation effect.

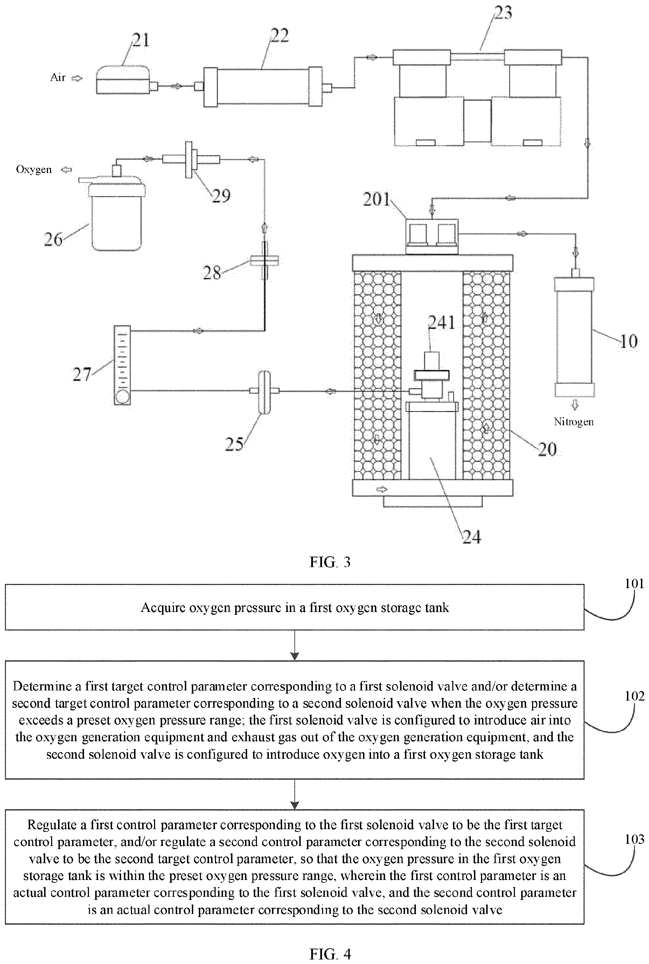

As shown in FIG. 3, the disclosure provides an oxygen generator. The oxygen generator includes an adsorption tower 20 and an exhaust muffler 10. The adsorption tower 20 includes a filling chamber to be filled with a molecular sieve and a nitrogen exhaust port in communication with the filling chamber. The exhaust muffler 10 includes a gas inlet and a gas outlet, and the gas inlet is in communication with the nitrogen exhaust port. The exhaust muffler 10 is configured to only allow the gas to flow unidirectionally from the gas inlet to the air outlet.

According to the above solution of the oxygen generator of the disclosure, the exhaust muffler 10 is arranged at the nitrogen exhaust port of the adsorption tower 20, and the exhaust muffler 10 is configured to only allow the gas to flow unidirectionally from the gas inlet to the air outlet, such that aerodynamic noise generated when nitrogen is discharged from the nitrogen exhaust port can be reduced, and the molecular sieve in the adsorption tower can be completely isolated from outside air, which prevents the deactivation of the molecular sieve caused by the outside air flowing from the gas outlet to the gas inlet and then entering the adsorption tower to be in contact with the molecular sieve.

The exhaust muffler 10 may include a muting housing 11 and a check valve assembly 12. The muting housing 11 includes a cavity. The gas inlet and the gas outlet are provided on the muting housing 11 and in communication with the cavity. The check valve assembly 12 is mounted in the cavity, and configured to be in unidirectional communication with the gas inlet and the gas outlet to only allow the gas to unidirectionally flow from the gas inlet to the air outlet.

In the disclosure, the check valve assembly 12 may have any suitable structure as long as a unidirectional flow of the gas from the gas inlet to the gas outlet can be realized. For example, the check valve assembly 12 may include a check valve core 121 and a check valve housing. The check valve housing is formed with a gas passage 122 for communicating the gas inlet and the air outlet. The check valve core 121 is provided inside the gas passage 122, and configured to move in a forward direction under a gas pressure from the gas inlet to unblock the gas passage 122 and move in a reverse direction to block the gas passage 122 when the gas pressure is lost. It can be understood that the movement of the check valve core 121 for opening the gas passage 122 is a forward movement, and the movement for blocking the gas passage 122 is a reverse movement, which can be a forward/reverse rotation or a forward/reverse motion, and is specifically determined according to the structure and mounting mode of the check valve core 121.

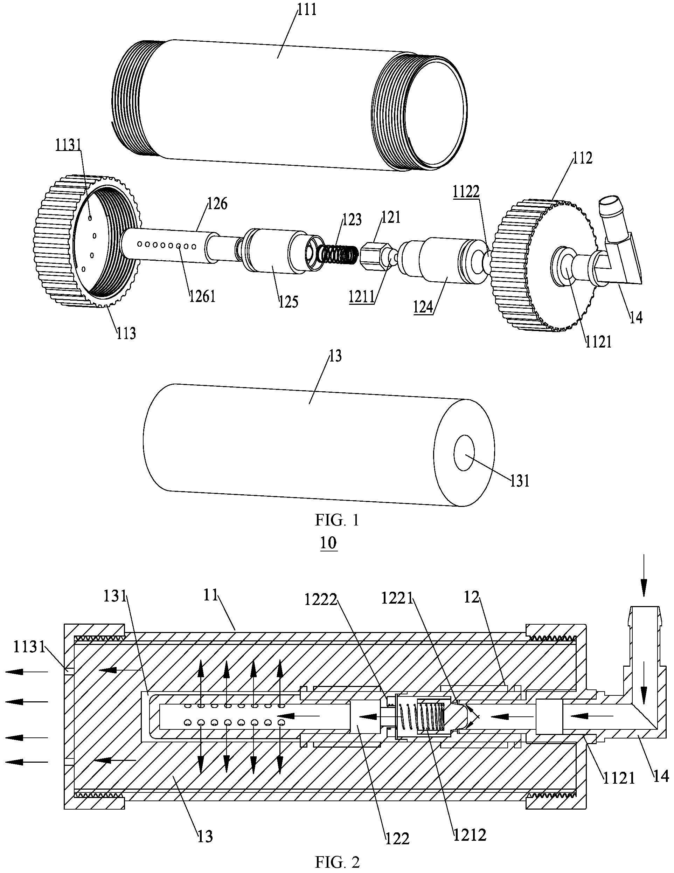

Specifically, in an embodiment, as shown in FIG. 1, the check valve core 121 may be an elastic valve plate mounted in the gas passage 122. In an initial state, the elastic valve plate is provided coaxially with the gas passage 122, and an outer circumference of the elastic valve plate is close contact with an inner wall of the gas passage 122. The elastic valve plate is configured to rotate in a forward direction under the pressure of the gas from the gas inlet to unblock the gas passage 122, and rotate back to the initial state in a reverse direction under a self-restoring force to block the gas passage 122 when the gas pressure is lost.

In another embodiment, the check valve core 121 may be a valve block movably provided within the gas passage 122. In this case, the check valve assembly 12 may further include an elastic member 123. The check valve core 121 is configured to be move in the forward direction under gas pressure from the gas inlet to unblock the gas passage 122, and move in the reverse direction under the resilience of the elastic member 123 to block the gas passage 122 when the gas pressure is lost. It will be appreciated that the unblocking/blocking of the gas passage 122 is realized by the structural matching between the check valve assembly 12 and the gas passage 122. For example, in an embodiment, the gas passage 122 may be a passage with a diameter that is tapered from the gas outlet to the air inlet, and the check valve core 121 may be a valve block having a diameter between a maximum diameter and a minimum diameter of the gas passage 122. When the valve block is subjected to gas pressure from the air inlet, the valve block moves toward the gas outlet (i.e. moves in the forward direction) such that a gap is generated between the valve block and the inner wall of the gas passage 122 to allow the gas to flow through. When the valve block loses the gas pressure from the air inlet, the valve block moves toward the gas inlet (i.e. moves in the reverse direction) under the action of the elastic member 123, so that the valve block is in close contact with the inner wall of the gas passage 122, thereby preventing the gas from passing through. Of course, in other embodiments, the diameter of the gas passage 122 may be substantially uniform. In this case, for example, as shown in FIG. 1 and FIG. 2, one end of the check valve core 121 may include a plug 1211, and the other end of the check valve core 121 may include a mounting groove 1212 where the elastic member 123 is mounted. The gas passage 122 is provided with a vent 1221 for matching with the plug 1211 to block the gas passage 122, and a stopper 1222 at the opposite side of the check valve core 121 for stopping the elastic member 123 to compress the elastic member 123 when the check valve core 121 moves in the forward direction.

With reference to FIG. 1 and FIG. 2, the gas passage 122 may be a linear passage with a circular cross-section. The check valve core 121 may include a cylindrical body. The right end of the cylindrical body is protrudingly formed with a plug 1211 having a circular cross-section with a smaller diameter. An annular wall is coaxially provided on the inner wall of the gas passage 122 to form the vent 1221. When the check valve core 121 moves to the right side until the plug 1211 is inserted into the vent 1221 and block the vent 1221, the gas passage 122 may be blocked. When the check valve core 121 moves to the left side away from the vent 1221, the gas passage 122 may be unblocked. The left end of the cylindrical body is sunken and formed with the mounting groove 1212. The right end of the elastic member 123 is accommodated in the mounting groove 1212. An annular blocking wall is coaxially provided on the inner wall of the gas passage 122 to form the stopper 1222. The left end of the elastic member 123 abuts against the stopper 1222.

In the above, the elastic member 123 may be a spring. The check valve core 121 may be made of soft rubber, and the cross-section of the main body of the check valve core 121 may be hexagonal to facilitate ventilation. The plug 1211 may have a tapered spherical surface (see FIG. 1).

In the disclosure, the check valve housing may be an integrated piece or a separate piece. In order to facilitate installation, maintenance, and replacement of the check valve core 121 and the elastic member 123, according to a preferred embodiment of the disclosure, the check valve housing includes an inlet end housing 124 and an outlet end housing 125 as shown in FIG. 1 and FIG. 2. The inlet end housing 124 and the outlet end housing 125 are detachably connected and together define the gas passage 122. The inlet end housing 124 is provided with an entrance for communicating the gas inlet with the gas passage 122, and the gas outlet end housing 125 is provided with an exit for communicating the gas outlet with the gas passage 122.

Specifically, as shown in FIG. 1 and FIG. 2, the inlet end housing 124 and the outlet end housing 125 are both a cylinder housing, and the plug connection of the inlet end housing 124 and the outlet end housing 125 is accomplished by a change in the diameter of the cylinder housing. The check valve core 121, the elastic member 123, and the vent 1221 are located in the inlet end housing 124, and the stopper 1222 is located in the outlet end housing 125.

In the disclosure, the check valve assembly 12 may further include an exhaust barrel 126. One end of the exhaust barrel 126 is closed (see the left end of the exhaust barrel 126 shown in FIG. 2), and the other end is open (see the right end of the exhaust barrel 126 shown in FIG. 2), the open end of the exhaust barrel 126 is connected to the outlet end of the gas passage 122. An exhaust hole 1261 is provided on a barrel wall of the exhaust barrel 126. There may be a plurality of exhaust holes 1261, and the plurality of exhaust holes 1261 may be arranged at intervals in the circumferential direction and the axial direction of the exhaust barrel 126. By providing the exhaust barrel 126, a large amount of gas discharged from the gas passage 122 can be introduced into the exhaust barrel 126 and then discharged to the surroundings through the exhaust holes 1261 into the soundproof sponge 13 (described hereinafter), thereby significantly reducing exhaust noise.

Here, as shown in FIG. 2, the open end of the exhaust barrel 126 is plugged into the outlet of the outlet end housing 125, and is detachably connected to the outlet end housing 125 by means of plug connection.

In the disclosure, the muting housing 11 may adopt any suitable structure. According to a preferred embodiment of the disclosure, as shown in FIG. 1 and FIG. 2, the muting housing 11 may include a barrel 111 and two end covers respectively covering both ends of the barrel 111. One of the end covers is provided with a gas inlet and formed as an inlet end cover 112, and the other end cover is provided with a gas outlet and formed as an outlet end cover 113. Here, it is understood that the inner cavity of the barrel 111 is formed as the cavity. In this embodiment, the check valve assembly 12 may be coaxially provided within the barrel 111, so that the exhaust muffler of the disclosure has a small volume.

Preferably, the inlet end cover 112 and the outlet end cover 113 are detachably provided at both ends of the barrel 111. Specifically, as shown in FIG. 1 and FIG. 2, the inlet end cover 112 and the outlet end cover 113 are detachably connected to the barrel 111 through threaded structures.

As shown in FIG. 1, the gas inlet may include an inlet through hole 1121 provided at the center of the inlet end cover 112. The gas outlet may include a plurality of outlet through holes 1131 provided on the outlet end cover 113 and arranged at intervals in the circumferential direction of the outlet end cover 113.

In the disclosure, the exhaust muffler 10 may further include a soundproof sponge 13. The soundproof sponge 13 is filled in the cavity, and provided with a mounting cavity 131 where the check valve assembly 12 is mounted.

Specifically, as shown in FIG. 1 and FIG. 2, the soundproof sponge 13 has a cylindrical shape adapted to the size of the inner cavity of the barrel 111. The mounting cavity 131 is a cylindrical cavity coaxially formed in the soundproof sponge 13. One end of the mounting cavity 131 is closed, and the other end is opened to allow the check valve assembly 12 to be inserted.

In the disclosure, the exhaust muffler 10 may further include an inlet spigot joint 14. The inlet spigot joint 14 is mounted at the air inlet.

Specifically, as shown in FIG. 2, the inlet spigot joint 14 is in the shape of letter L. One end of the inlet spigot joint 14 is inserted into the gas inlet from the outside of the inlet end cover 112, and is detachably connected to the inlet end cover 112 through plug connection. An inner side of the inlet end cover 112 is provided with an inlet tube 1122 extending coaxially inward corresponding to the air inlet. The inlet tube 1122 is inserted into the inlet of the inlet end housing 124, and is detachably connected to the inlet end housing 124 through plug connection.

It should be noted that the exhaust muffler 10 of the disclosure can be applied not only to an oxygen generator but also to an exhaust port of any other equipment that needs to be isolated from the outside air.

In the disclosure, as shown in FIG. 3, the oxygen generator may further include an inlet filter 21, an inlet muffler 22, an air compressor 23, and an oxygen storage tank 24, an oxygen filter 25, and a humidification cup 26 in communication in sequence. The adsorption tower 20 further includes a gas inlet and an oxygen exhaust port that are in communication with the filling chamber. The gas outlet of the air compressor 23 is in communication with the air inlet, and the oxygen inlet of the oxygen storage tank 24 is in communication with the oxygen exhaust port. After being processed by the inlet filter 21, the inlet muffler 22, and the air compressor 23, the air enters the adsorption tower 20. Oxygen and nitrogen are separated from the air through the molecular sieve. The separated oxygen is collected into the oxygen storage tank 24 via the oxygen exhaust port of the adsorption tower 20, then is output to the humidification cup 26 via the conduit, and is supplied for oxygen inhalation by a patient via an oxygen inhalation tube. The separated nitrogen is discharged through the nitrogen exhaust port, and discharged to the air through the exhaust muffler 10.

Here, as shown in FIG. 3, the nitrogen exhaust port may be provided with a control valve 201 for controlling the discharge of nitrogen. The oxygen storage tank 24 may be provided with a pressure regulation valve 241 for regulating the oxygen exhaust pressure at the oxygen exhaust port thereof. The connection conduit between the oxygen filter 25 and the humidification cup 26 may be provided with a flowmeter 27, a check valve 28, and an oxygen discharge spigot joint 29.

According to an aspect of the disclosure, provided is an exhaust muffler. The exhaust muffler 10 includes a muting housing 11 and a check valve assembly 12. The muting housing 11 includes a cavity, a gas inlet and a gas outlet both in communication with the cavity. The check valve assembly 12 is mounted in the cavity, and is configured to be in unidirectional communication with the gas inlet and the gas outlet to only allow the gas to flow from the gas inlet to the air outlet.

By adopting the above-mentioned solution, the exhaust muffler 10 of the disclosure is provided with the check valve assembly 12 in the muting housing 11 to realize a unidirectional flow of the gas from the gas inlet to the air outlet. Therefore, when the exhaust muffler 10 is applied to an oxygen generator, the molecular sieve in the adsorption tower of the oxygen generator can be completely isolated from the outside air, which prevents the outside air from flowing from the gas outlet to the gas inlet and then entering the adsorption tower to be in contact with the molecular sieve, thereby avoiding deactivation of the molecular sieve.

In the disclosure, the check valve assembly 12 may adopt any suitable structure as long as a unidirectional flow of the gas from the gas inlet to the gas outlet can be realized. For example, the check valve assembly 12 may include a check valve core 121 and a check valve housing. The check valve housing is formed with a gas passage 122 that is communication with the gas inlet and the air outlet. The check valve core 121 is provided inside the gas passage 122, and configured to move in a forward direction under a gas pressure from the gas inlet to unblock the gas passage 122, and move in a reverse direction to block the gas passage 122 when the gas pressure is lost. It can be understood that the movement of the check valve core 121 for unblocking the gas passage 122 is the forward movement, and the movement of the check valve core 121 for blocking the gas passage 122 is the reverse movement, which may be a forward or reverse rotation or a forward or reverse motion, and are specifically determined according to the structure and mounting mode of the check valve core 121.

Specifically, in an embodiment, the check valve core 121 may be an elastic valve plate mounted in the gas passage 122. In an initial state, the elastic valve plate is provided coaxially with the gas passage 122, and the outer circumference of the elastic valve plate is in close contact with the inner wall of the gas passage 122. The elastic valve plate is configured to rotate in a forward direction under the gas pressure from the gas inlet to unblock the gas passage 122, and rotate back to the initial state in a reverse direction under a self-restoring force to block the gas passage 122 when the gas pressure is lost.

In another embodiment, the check valve core 121 may be a valve block movably provided within the gas passage 122. In this case, the check valve assembly 12 may further include an elastic member 123. The check valve core 121 is configured to be move in a forward direction under the gas pressure from the gas inlet to unblock the gas passage 122, and move in a reverse direction under a restoring force of the elastic member 123 to block the gas passage 122 when the gas pressure is lost. It will be appreciated that the unblocking/blocking of the gas passage 122 is realized by the structural matching between the check valve assembly 12 and the gas passage 122. For example, in an embodiment, the gas passage 122 may be a passage that tapers in diameter from the gas outlet to the air inlet, and the check valve core 121 may be a valve block having a diameter between a maximum diameter and a minimum diameter of the gas passage 122. When the valve block is subjected to the gas pressure from the air inlet, the valve block moves toward the gas outlet (i.e. moves in a forward direction) such that a gap is generated between the valve block and the inner wall of the gas passage 122 to allow the gas flow to pass through. When the valve block loses the gas pressure from the air inlet, the valve block moves toward the gas inlet (i.e. moves in a reverse direction) under the action of the elastic member 123, so that the valve block is in close contact with the inner wall of the gas passage 122, thereby preventing the gas from passing through. Of course, in other embodiments, the diameter of the gas passage 122 may be substantially uniform. In this case, for example, as shown in FIG. 1 and FIG. 2, one end of the check valve core 121 may include a plug 1211, and the other end of the check valve core 121 may include a mounting groove 1212 where the elastic member 123 is mounted. The gas passage 122 is provided with a vent 1221 for matching with the plug 1211 to block the gas passage 122, and a stopper 1222 at the opposite side of the check valve core 121 for stopping the elastic member 123 to compress the elastic member 123 when the check valve core 121 moves in the forward direction.

With reference to FIG. 1 and FIG. 2, the gas passage 122 may be a linear passage with a circular cross-section. The check valve core 121 may include a cylindrical body. The right end of the cylindrical body is protrudingly formed with a plug 1211 having a circular cross-section with a smaller diameter. An annular wall is coaxially provided on the inner wall of the gas passage 122 to form the vent 1221. When the check valve core 121 moves to the right side until the plug 1211 is inserted into the vent 1221 and block the vent 1221, the gas passage 122 may be blocked. When the check valve core 121 moves to the left side away from the vent 1221, the gas passage 122 may be unblocked. The left end of the cylindrical body is sunken and formed with the mounting groove 1212. The right end of the elastic member 123 is accommodated in the mounting groove 1212. An annular blocking wall is coaxially provided on the inner wall of the gas passage 122 to form the stopper 1222. The left end of the elastic member 123 abuts against the stopper 1222.

In the above, the elastic member 123 may be a spring. The check valve core 121 may be made of soft rubber, and the cross-section of the main body of the check valve core 121 may be hexagonal to facilitate ventilation. The plug 1211 may have a tapered spherical surface (see FIG. 1).

In the disclosure, the check valve housing may be an integrated piece or a separate piece. In order to facilitate installation, maintenance, and replacement of the check valve core 121 and the elastic member 123, according to a preferred embodiment of the disclosure, the check valve housing includes an inlet end housing 124 and an outlet end housing 125 as shown in FIG. 1 and FIG. 2. The inlet end housing 124 and the outlet end housing 125 are detachably connected and together define the gas passage 122. The inlet end housing 124 is provided with an entrance for communicating the gas inlet with the gas passage 122, and the gas outlet end housing 125 is provided with an exit for communicating the gas outlet with the gas passage 122.

Specifically, as shown in FIG. 1 and FIG. 2, the inlet end housing 124 and the outlet end housing 125 are both a cylinder housing, and the plug connection of the inlet end housing 124 and the outlet end housing 125 is accomplished by a change in the diameter of the cylinder housing. The check valve core 121, the elastic member 123, and the vent 1221 are located in the inlet end housing 124, and the stopper 1222 is located in the outlet end housing 125.

In the disclosure, the check valve assembly 12 may further include an exhaust barrel 126. One end of the exhaust barrel 126 is closed (see the left end of the exhaust barrel 126 shown in FIG. 2), and the other end is open (see the right end of the exhaust barrel 126 shown in FIG. 2), the open end of the exhaust barrel 126 is connected to the outlet end of the gas passage 122. An exhaust hole 1261 is provided on a barrel wall of the exhaust barrel 126. There may be a plurality of exhaust holes 1261, and the plurality of exhaust holes 1261 may be arranged at intervals in the circumferential direction and the axial direction of the exhaust barrel 126. By providing the exhaust barrel 126, a large amount of gas discharged from the gas passage 122 can be introduced into the exhaust barrel 126 and then discharged to the surroundings through the exhaust holes 1261 into the soundproof sponge 13 (described hereinafter), thereby significantly reducing exhaust noise.

Here, as shown in FIG. 2, the open end of the exhaust barrel 126 is plugged into the outlet of the outlet end housing 125, and is detachably connected to the outlet end housing 125 by means of plug connection.

In the disclosure, the muting housing 11 may adopt any suitable structure. According to a preferred embodiment of the disclosure, as shown in FIG. 1 and FIG. 2, the muting housing 11 may include a barrel 111 and two end covers respectively covering both ends of the barrel 111. One of the end covers is provided with a gas inlet and formed as an inlet end cover 112, and the other end cover is provided with a gas outlet and formed as an outlet end cover 113. Here, it is understood that the inner cavity of the barrel 111 is formed as the cavity. In this embodiment, the check valve assembly 12 may be coaxially provided within the barrel 111, so that the exhaust muffler of the disclosure has a small volume.

Preferably, the inlet end cover 112 and the outlet end cover 113 are detachably provided at both ends of the barrel 111. Specifically, as shown in FIG. 1 and FIG. 2, the inlet end cover 112 and the outlet end cover 113 are detachably connected to the barrel 111 through threaded structures.

As shown in FIG. 1, the gas inlet may include an inlet through hole 1121 provided at the center of the inlet end cover 112. The gas outlet may include a plurality of outlet through holes 1131 provided on the outlet end cover 113 and arranged at intervals in the circumferential direction of the outlet end cover 113.

In the disclosure, the exhaust muffler 10 may further include a soundproof sponge 13. The soundproof sponge 13 is filled in the cavity, and provided with a mounting cavity 131 where the check valve assembly 12 is mounted.

Specifically, as shown in FIG. 1 and FIG. 2, the soundproof sponge 13 has a cylindrical shape adapted to the size of the inner cavity of the barrel 111. The mounting cavity 131 is a cylindrical cavity coaxially formed in the soundproof sponge 13. One end of the mounting cavity 131 is closed, and the other end is opened to allow the check valve assembly 12 to be inserted.

In the disclosure, the exhaust muffler 10 may further include an inlet spigot joint 14. The inlet spigot joint 14 is mounted at the air inlet.

Specifically, as shown in FIG. 2, the inlet spigot joint 14 is in the shape of letter L. One end of the inlet spigot joint 14 is inserted into the gas inlet from the outside of the inlet end cover 112, and is detachably connected to the inlet end cover 112 through plug connection. An inner side of the inlet end cover 112 is provided with an inlet tube 1122 extending coaxially inward corresponding to the air inlet. The inlet tube 1122 is inserted into the inlet of the inlet end housing 124, and is detachably connected to the inlet end housing 124 through plug connection.

The exhaust muffler 10 of the disclosure may be applied to an exhaust port of any equipment needs to be isolated from the outside air, for example a nitrogen exhaust port of an adsorption tower in an oxygen generator.

Here, the exhaust muffler 10 may be provided at any exhaust port of the oxygen generator that needs to be isolated from the outside air.

For example, as shown in FIG. 3, the oxygen generator includes a molecular sieve adsorption tower 20. The molecular sieve adsorption tower 20 includes a nitrogen exhaust port. The gas inlet of the exhaust muffler 10 is in communication with the nitrogen exhaust port. Thus, the molecular sieve adsorption tower 20 can discharge the separated nitrogen into the air through the exhaust muffler 10, while the outside air cannot enter the molecular sieve adsorption tower 20 through the exhaust muffler 10 to be in contact with the molecular sieve, thereby achieving the function of effectively protecting the molecular sieve during the storage or long-term non-use of the oxygen generator and extending the service life of the molecular sieve.

The gas inlet of the exhaust muffler 10 may be connected to the nitrogen exhaust port through an inlet spigot joint 14.

Further, as shown in FIG. 3, the oxygen generator may further include an inlet filter 21, an inlet muffler 22, an air compressor 23, an oxygen storage tank 24, an oxygen filter 25, and a humidification cup 26. The inlet filter 21, the inlet muffler 22, the air compressor 23, the molecular sieve adsorption tower 20, the oxygen storage tank 24, the oxygen filter 25, and the humidification cup 26 are in communication in sequence. After being processed by the inlet filter 21, inlet muffler 22, and air compressor 23, the air enters the molecular sieve adsorption tower 20. Oxygen and nitrogen are separated from the air through the molecular sieve. The separated oxygen is collected into the oxygen storage tank 24 via the oxygen exhaust port of the molecular sieve adsorption tower 20, then is output to the humidification cup 26 via the conduit, and is supplied for oxygen inhalation by a patient via the oxygen inhalation tube. The separated nitrogen is discharged through the nitrogen exhaust port and discharged into the air through the exhaust muffler 10.

As shown in FIG. 3, a control valve 201 may be provided at the nitrogen exhaust port for controlling the discharge of nitrogen. A pressure regulation valve 241 may be provided at the oxygen exhaust port of the oxygen storage tank 24 for regulating the oxygen exhaust pressure. The connection conduit between the oxygen filter 25 and the humidification cup 26 may be provided with a flowmeter 27, a check valve 28, and an oxygen discharge spigot joint 29.

An embodiment of the disclosure relates to the technical field of medical apparatus and instruments, in particular to a molecular sieve oxygen generator.

A molecular sieve tank inside the molecular sieve oxygen generator can adsorb nitrogen. Therefore, after supplying the air into the molecular sieve oxygen generator, oxygen in a high concentration subjected to the adsorption can be obtained. The molecular sieve oxygen generator is provided with a second oxygen storage tank that is connected to the molecular sieve tank for storing the generated oxygen.

In the related art, an end cover is hermetically connected with a lower end opening of the molecular sieve tank. A gas path joint in communication with the interior of the molecular sieve tank is provided on the end cover, and the gas path joint is connected to a conduit in communication with the gas storage tank.

However, the assembly process is complicated and the air tightness is poor if the connection between the molecular sieve tank and the second oxygen storage tank is realized by means of the gas path joint and the conduit.

The technical solutions in the embodiments of the disclosure will be described clearly and thoroughly in conjunction with the accompanying drawings in the embodiments of the disclosure. Apparently, the described embodiments are a part of the embodiments of the disclosure, rather than all the embodiments. Based on the embodiments of the disclosure, all other embodiments obtained by those skilled in the art without paying creative effort fall within the scope of the disclosure.

The medical molecular sieve oxygen generator takes zeolite molecular sieve as the adsorbent, utilizes the air as a raw material through Pressure Swing Adsorption (PSA) technology at a room temperature and a low pressure, to separate nitrogen and oxygen from the air by a physical method, thereby generating high-purity medical oxygen.

The molecular sieve oxygen generator provided by the disclosure is illustrated in details in conjunction with the accompanying drawings.

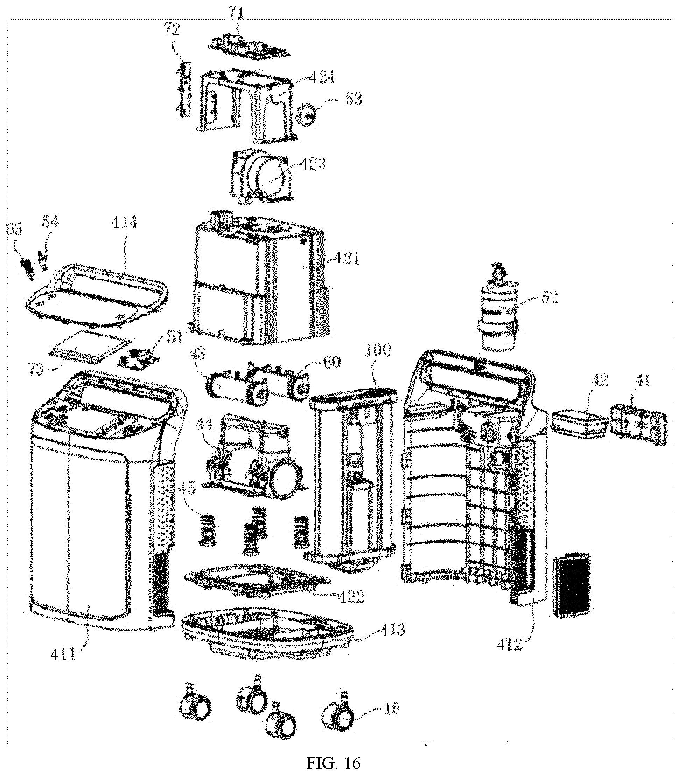

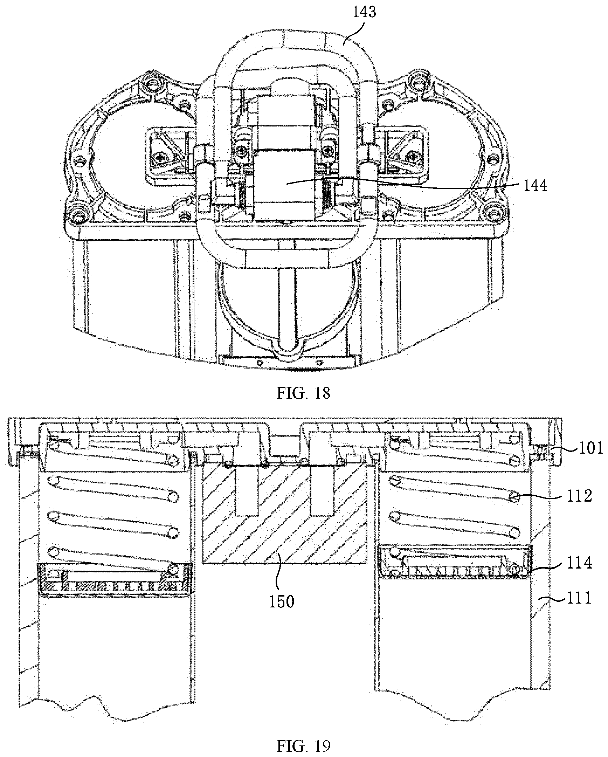

As shown in FIG. 16 to FIG. 20, the molecular sieve oxygen generator provided by the disclosure includes a first sieve tank 111, a second oxygen storage tank 130, and an airway assembly.

The first sieve tank 111 includes a first open end and a second open end, and a molecular sieve for adsorbing nitrogen is provided between the first open end and the second open end. In operation, the raw material gas enters the first sieve tank 111 from the first open end, and the gas subjected to the adsorption by the molecular sieve is discharged from the second open end. When the raw material gas is the air, the air is subjected to the adsorption of the molecular sieve to form a gas containing a high concentration of oxygen.

In order to store the oxygen discharged from the second open end, the molecular sieve oxygen generator is provided with a second oxygen storage tank 130 in communication with the second open end of the first sieve tank 111. The airway assembly is connected to the first sieve tank 111 and the second oxygen storage tank 130, respectively, to form a first oxygen discharge passage between the first sieve tank 111 and the second oxygen storage tank 130.

The airway assembly includes a lower end cover 141 and a gas distribution plate 142. The lower end cover 141 is in tight coupling with the second open end of the first sieve tank 111. The gas distribution plate 142 is disposed on a side of the lower end cover 141 facing away from the first sieve tank 111 to form a first oxygen discharge passage.

Exemplarily, the lower end cover 141 is provided with a first through hole in communication with the first sieve tank 111 and a second through hole in communication with the second oxygen storage tank 130. The gas distribution plate 142 is provided with a groove having a length greater than the distance between the first through hole and the second through hole. After the gas distribution plate 142 is snap-fitted to the lower end cover 141, the groove communicates the first through hole and the second through hole, thereby forming a first oxygen discharge passage.

Exemplarily, the lower end cover 141 is provided with a first through hole in communication with the first sieve tank 111 and a second through hole in communication with the second oxygen storage tank 130, and a groove connecting the first through hole and the second through hole is provided on a side of the lower end cover 141 facing the gas distribution plate 142. After the gas distribution plate 142 is snap-fitted to the lower end cover 141, the first oxygen discharge passage is formed.

It is to be understood that the specific configurations of the lower end cover 141 and the gas distribution plate 142 are not limited in the disclosure as long as the first oxygen discharge passage can be formed after the lower end cover 141 and the gas distribution plate 142 are snap-fitted.

According to the molecular sieve oxygen generator provided by the disclosure, the first sieve tank 111 is connected to the second oxygen storage tank 130 through the first oxygen discharge passage formed by snap-fitting the lower end cover 141 and the gas distribution plate 142. Compared with the related art in which the first sieve tank is connected to the second oxygen storage tank through the gas path joints and the conduit, the connection points between the gas path joints and the conduit are reduced, thus improving the gas tightness. Compared with an integrally formed oxygen discharge passage, the processing difficulty of the oxygen discharge passage is reduced.

After adsorbing a certain amount of nitrogen, the molecular sieve will reach saturation, and cannot continue to adsorb, thereby affecting the oxygen generation efficiency. In order to improve the oxygen generation efficiency, the molecular sieve oxygen generator generally includes two sieve tanks, and each of the sieve tanks is provided with a molecular sieve. In operation, one of the sieve tanks generates oxygen by adsorbing nitrogen. When the molecular sieve is saturated, it begins to release nitrogen, meanwhile, the other sieve tank begins to adsorb nitrogen, thereby achieving uninterrupted oxygen generation.

Optionally, the molecular sieve oxygen generator further includes a second sieve tank 121. A first open end of the second sieve tank 121 is in communication with an exhaust port to exhaust nitrogen released by the molecular sieve in the second sieve tank 121 through the exhaust port. The second open ends of the first sieve tank 111 and the second sieve tank 121 are in tight coupling with the lower end cover 141 to improve the structural compactness of the molecular sieve oxygen generator.

The airway assembly further includes a pressure equalizing pipe 143 and a pressure equalizing valve 144. One end of the pressure equalizing pipe 143 is in communication with the first oxygen discharge passage, and the other end of the pressure equalizing pipe 143 is in communication with the second open end of the second sieve tank 121. The pressure equalizing valve 144 is provided in the pressure equalizing pipe 143 to control the unblocking/blocking of the pressure equalizing pipe 143.

The adsorption of nitrogen by molecular sieves needs to be accomplished in a relatively high pressure environment. In order to enable a sieve tank that has released the nitrogen to quickly switch to the adsorption state, it is necessary to quickly increase the pressure inside the sieve tank. In view of this, the second end of the first sieve tank 111 and the second end of the second sieve tank 121 are communicated through the pressure equalizing pipe 143 and the pressure equalizing valve 144, so that the gas subjected to the adsorption through the molecular sieve in the first sieve tank 111 can enter the second sieve tank 121, thereby raising the pressure in the second sieve tank 121. The molecular sieve oxygen generator may include a control board connected to the pressure equalizing valve 144 to control the unblocking/blocking of the pressure equalizing valve 144.

Exemplarily, the molecular sieve oxygen generator may include three states. In the first state, the first sieve tank 111 adsorbs nitrogen, and the second sieve tank 121 releases nitrogen; in the second state, the first sieve tank 111 is in communication with the second sieve tank 121 to rapidly increase the pressure in the second sieve tank 121; in the third state, the second sieve tank 121 adsorbs nitrogen, and the first sieve tank 111 releases nitrogen. The control board is configured to control the pressure equalizing valve 144 to be open in the second state, and to be closed in the first and third states.

Optionally, an exhaust check valve is provided between the exhaust port and the second sieve tank 121, the exhaust check valve is used for preventing gas from flowing from the exhaust port to the second sieve tank 121. When the molecular sieve oxygen generator is not operated for a long time, the exhaust check valve may prevent moisture in the outside air from entering the second sieve tank 121 through the exhaust port, and avoid reducing the life of the molecular sieve.

Optionally, a first exhaust muffler 60 is provided at the exhaust port, and the first exhaust muffler 60 and the exhaust check valve are of an integrated structure. The first exhaust muffler 60 can reduce noise in the exhaust process. Providing the first exhaust muffler 60 and the exhaust check valve as an integrated structure can make the structure compact. Herein, the integrated structure means that the first exhaust muffler 60 and the exhaust check valve are integrated together, rather than an unibody structure.

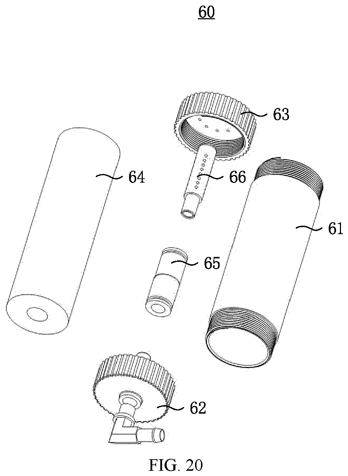

Exemplarily, as shown in FIG. 20, the first exhaust muffler 60 includes a muffler barrel 61, a first inlet end cover 62 and an exhaust end cover 63 provided at both ends of the muffler barrel 61, a soundproof sponge 64 provided in the muffler barrel 61, an exhaust check valve 65, and a muffler inner core 66.

Optionally, a first joint and a second joint are provided on the gas distribution plate 142. The pressure equalizing pipe 143 is in communication with the first oxygen discharge passage through the first j oint, and in communication with the second open end of the second sieve tank 121 through the second joint.

The first joint and/or the second joint are of an integrated structure with the gas distribution plate 142. The gas tightness may be improved due to the integrated structure of the first joint and/or the second joint with the gas distribution plate 142. Herein, the integrated structure means that the first joint and/or the second joint is integrally formed with the gas distribution plate 142.

Exemplarily, the gas distribution plate 142 is made of plastic materials, and the gas distribution plate 142, the first joint and the second joint are integrally formed by an injection molding process.

Optionally, the airway assembly further includes a cleaning pipeline. One end of the cleaning pipeline is in communication with the oxygen discharge passage, and the other end is in communication with the second open end of the second sieve tank 121. A throttle bridge is provided in the cleaning pipeline so as to generate a cleaning air flow blown into the second sieve tank 121.

Nitrogen may have not been incompletely released during a nitrogen releasing process of the molecular sieve. The cleaning pipeline may generate a high pressure cleaning air flow, and the molecular sieve may release more completely by blowing the cleaning air flow toward the molecular sieve.

Exemplarily, the gas distribution plate 142 is provided with a fourth joint in communication with the first sieve tank 111 and a fifth joint in communication with the second sieve tank 121, and a cleaning pipeline is connected between the fourth joint and the fifth joint.

Optionally, a second oxygen discharge passage is further provided in the airway assembly. One end of the second oxygen discharge passage is in communication with the second sieve tank 121, and the other end is in communication with the second oxygen storage tank 130. The second oxygen discharge passage is configured to, when oxygen is generated in the second sieve tank 121, allow oxygen to enter the second oxygen storage tank 130 through the second oxygen discharge passage. The structural form and forming manner of the second oxygen discharge passage may refer to the first oxygen discharge passage, which will not be described in detail.

A first check valve 147 is provided in the second oxygen discharge passage, and the first check valve 147 is configured to prevent gas from flowing to the second sieve tank 121 from the second oxygen storage tank 130. By providing the first check valve 147, when the second sieve tank 121 releases nitrogen, the oxygen in the second oxygen storage tank 130 will not be discharged through the second oxygen discharge passage.

Optionally, the first oxygen discharge passage is in communication with the second oxygen storage tank 130 through the first check valve 147. The first check valve 147 is further configured to prevent gas from flowing to the first sieve tank 111 from the second oxygen storage tank 130.

Optionally, the lower end cover 141 is provided with a third joint in communication with the oxygen discharge passage. The second oxygen storage tank 130 is mounted on the lower end cover 141, and is in communication with the oxygen discharge passage through the third joint.

Exemplarily, the lower end cover 141 includes a first end connected to the first sieve tank 111, a second end connected to the second sieve tank 121, and a connection part between the first end and the second end. The third joint is connected to the connection part such that the second oxygen storage tank 130 is provided between the first sieve tank 111 and the second sieve tank 121.

Optionally, the molecular sieve oxygen generator further includes a first control valve. The first control valve is connected to the first open end of the first sieve tank 111, the first open end of the second sieve tank 121, and the air inlet. When the first control valve is in the second state, both the first open end of the first sieve tank 111 and the first open end of the second sieve tank 121 are in communication with the air inlet. The first control valve is controlled to enable the first end of the first sieve tank 111 to be in communication with the first end of the second sieve tank 121, so that the pressure in the second sieve tank 121 may be rapidly increased in the second state, thereby improving the oxygen generation efficiency.

For example, the first control valve is a three-position four-way valve. The first control valve is respectively connected to the air inlet, the exhaust port, the first open end of the first sieve tank 111, and the first open end of the second sieve tank 121. When the molecular sieve oxygen generator is in the first state, the first control valve is controlled to enable the gas inlet to be in communication with the first open end of the first sieve tank 111, and enable the exhaust port to be in communication with the first open end of the second sieve tank 121. When the molecular sieve oxygen generator is in the second state, the first control valve is controlled to enable the gas inlet to be in communication with the first open end of the first sieve tank 111 and the first open end of the second sieve tank 121. When the molecular sieve oxygen generator is in the third state, the first control valve is controlled to enable the gas inlet to be in communication with the first open end of the second sieve tank 121, and enable the exhaust port to be in communication with the first open end of the first sieve tank 111.

Hereinafter, the molecular sieve oxygen generator provided by the disclosure is illustrated in details in conjunction with a specific example.

As shown in FIG. 16, the molecular sieve oxygen generator includes an outer housing composed of a front housing 411, a rear housing 412, a base 413, and an upper housing 414. The outer housing is configured to support and connect other components of the molecular sieve oxygen generator. In order to facilitate the movement of the molecular sieve oxygen generator, casters 15 are connected to the base 413.

In the air flow direction, the molecular sieve oxygen generator is provided with an inlet filtering window 41, an inlet filter 42, an inlet muffler 43, a compressor 44, and a molecular sieve tank assembly 100 connected in sequence. The inlet filtering window 41 and the inlet filter 42 are used for filtering the air. The inlet filter 42 is mounted to the outer housing.

The molecular sieve tank assembly 100 is secured to the base 413 by screws, including an air inlet, an exhaust port, and an oxygen outlet. An outlet end of the compressor 44 is connected to an inlet end of the first control valve 150 via a connection tube. The compressed air enters the molecular sieve tank assembly 100 via the first control valve 150, so that the molecular sieve tank assembly 100 performs adsorption and desorption (oxygen generation and nitrogen discharge). Since the air is compressed by the compressor 44, the air entering the molecular sieve tank assembly 100 satisfies the pressure condition for adsorption. The inlet end of the first control valve 150 may be the inlet of the molecular sieve tank assembly 100. The inlet end of the first control valve 150 is provided with a metal spigot joint. The metal spigot joint is connected to an atomization spigot joint 53 via a pipeline, the atomization spigot joint 53 is mounted to the front housing 411. The atomization function can be achieved by an external atomization inhaler. The exhaust port is connected to the first exhaust muffler 60. Nitrogen generated after adsorption is discharged into the atmosphere through the first exhaust muffler 60. The exhaust end of the first control valve 150 may be the exhaust port of the molecular sieve tank assembly 100. The oxygen outlet is successively connected to a pressure regulation valve 131, an oxygen filter, a flow regulation device 51 and a first oxygen discharge spigot joint 54 along the oxygen flow direction. The generated oxygen is subjected to pressure regulation, filtration treatment, and output oxygen flow control. The first oxygen discharge spigot joint 54 is mounted on the front housing 411.

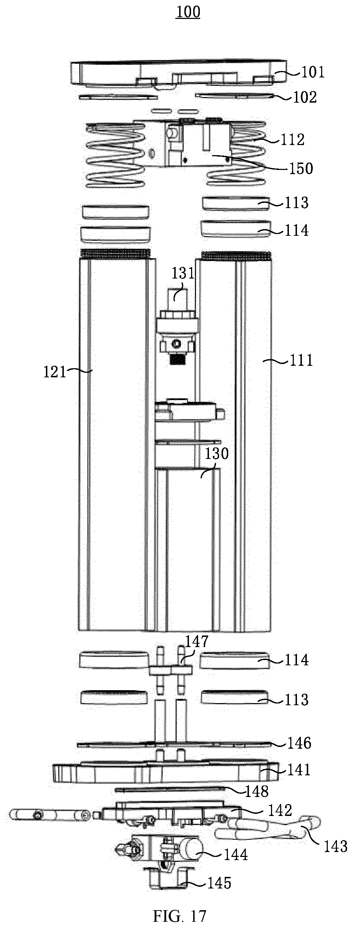

As shown in FIG. 17, the molecular sieve tank assembly 100 includes an upper end cover 101, an upper sealing gasket 102, a spring 112, a sieve plate 113, a non-woven fabric 114, the first check valve 147, the first sieve tank 111, and the second sieve tank 121. The first sieve tank 111 and the second sieve tank 121 each are filled with a molecular sieve. The spring 112 compresses the molecular sieve through the sieve plate 113 and the non-woven fabric 114, thereby fixing the position of the molecular sieve. The upper end cover 101 is located at the upper end of the spring 112 to stop the spring 112 and block the upper end of the first sieve tank 111. The upper sealing gasket 102 is provided between the upper end cover 101 and the first sieve tank 111 to improve the tightness. The lower end of the first sieve tank 111 is connected with an airway assembly. The airway assembly includes a lower end cover 141 covering the lower end of the first sieve tank 111, and a gas distribution plate 142 snap-fitted to the side of the lower end cover 141 facing away from the first sieve tank 111. In order to improve the air tightness, an end cover sealing gasket 146 is provided between the lower end cover 141 and the first sieve tank 111, and a gas distribution plate sealing gasket 148 is provided between the gas distribution plate 142 and the lower end cover 141. The gas distribution plate 142 is connected to a pressure equalizing pipe 143 and a pressure equalizing valve 144 for communicating the first sieve tank 111 and the second sieve tank 121. The pressure equalizing valve 144 is mounted on the gas distribution plate 142 through a pressure equalizing valve mounting holder 145. One end of the first check valve 147 is connected to the lower end cover 141, and the other end of the first check valve 147 is in communication with the second oxygen storage tank 130.

The gas distribution plate 142 may be provided with 4 spigot joints. A throttle bridge is inserted into a silicone tube. One end of the silicone tube is connected to one of the spigot joints of the gas distribution plate 142, and the other end of the silicone tube is connected to another spigot joint of the gas distribution plate 142. The two spigot joints are respectively on the same side of the gas distribution plate 142, so that the oxygen in the first sieve tank 111 is in communication with that in the second sieve tank 121, so as to perform cleaning.

The inlet and outlet spigot joints of the pressure equalizing valve 144 are respectively connected to a silicone tube, and the other ends of the silicone tubes are respectively connected to another two spigot joints of the gas distribution plate. The oxygen in the first sieve tank 111 and the second sieve tank 121 is enabled to be unblocking/blocking by controlling the pressure equalizing valve 144.

In order to reduce the noise during the operation of the molecular sieve oxygen generator, a denoise box is further provided in the outer housing. The denoise box includes a denoise outer housing 421 and a denoise base 422. The compressor 44 is connected to the denoise base 422 via a damping member 45. The inlet muffler 43 and the first exhaust muffler 60 are provided in the denoise box. The inlet muffler 43 is configured to reduce the intake sound of the compressor 44 during the operation. In order to further improve the denoise effect, a denoise sponge may be adhered to the inner wall of the denoise box. In order to improve the heat dissipation effect, a heat dissipation fan 423 is provided above the denoise outer housing 421. The gas outlet position of the heat dissipation fan 423 is facing the compressor 44 inside the denoise box so as to ventilate and dissipate heat for the compressor 44. A mounting bracket 424 for fixing a main board 71 and an oxygen concentration sensor 72 is mounted above the heat dissipation fan 423.

The molecular sieve oxygen generator further includes a display device 73 and a first humidification cup 52 mounted on the outer housing. The display device 73 is configured to display information about the human-computer interaction with an operator. The first humidification cup 52 is fastened by means of a humidification cup strap.

The disclosure relates to the technical field of oxygen generation equipment, in particular to an adsorption tower and a molecular sieve oxygen generator.

The adsorption tower mounted in the molecular sieve oxygen generator in existing technologies mainly is of a separation type or an integration type. However, both separation and integration adsorption towers have complex pipeline connections and multiple risk points of gas leakage caused by the use of multiple spigot joints in pipeline connections, leading to the common problem of low oxygen generation efficiency in the above two forms of adsorption towers.

Hereinafter, exemplary embodiments of the disclosure will be described in more detail with reference to the accompanying drawings. While the drawings show exemplary embodiments of the disclosure, it should be understood that the disclosure may be embodied in various forms and should not be construed as limited to the embodiments set forth herein. On the contrary, these embodiments are provided to enable a more thorough understanding of the disclosure and to fully convey the scope of the disclosure to those skilled in the art.

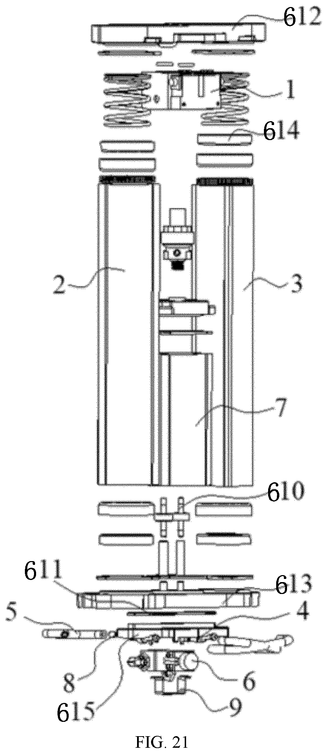

Referring to FIG. 21 to FIG. 23, an embodiment of the disclosure provides an adsorption tower. The adsorption tower may include a second control valve 1, a first molecular sieve tank 2, a second molecular sieve tank 3, a gas distribution plate 4, a first connection tube 5, and a first pressure equalizing valve 6.

The second control valve 1 is configured to, on one hand, control the air input and the nitrogen discharge of the first molecular sieve tank 2 and the second molecular sieve tank 3, respectively, and on the other hand, to control the communication between the first molecular sieve tank 2 and the second molecular sieve tank 3. The second control valve 1 may include a gas inlet end, an exhaust end, and two gas outlet ends. Among them, the gas inlet end is configured to discharge air, and the exhaust end is configured to discharge nitrogen. The second control valve 1 may be a solenoid valve. The type of the second control valve 1 may be selected by those skilled in the art according to practical application scenarios, which is not defined herein. For example, the second control valve 1 may be a two-position four-way valve. As another example, there may be provided with several second control valves 1. Preferably, the adsorption tower may include a second inlet end cover 612 and a first outlet end cover 613. The second control valve 1 may be mounted in the second inlet end cover 612. The second inlet end cover 612 and the first outlet end cover 613 are fastened to the top and bottom of the adsorption tower by screws, respectively.

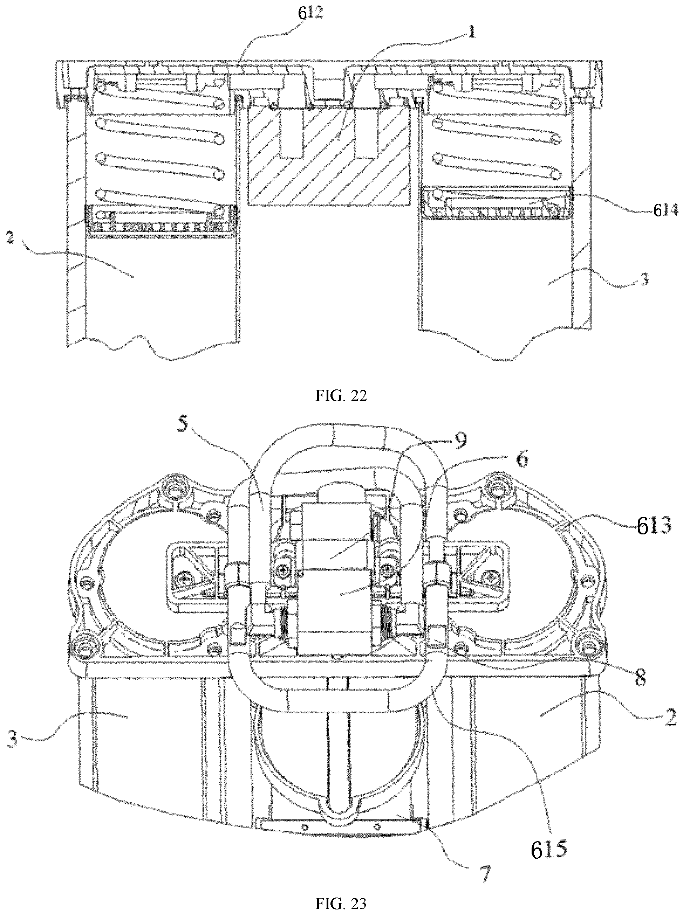

The inlet end of the first molecular sieve tank 2 is in communication with one of the gas outlet ends. In addition, during the desorption process, the inlet end of the first molecular sieve tank 2 serves as a waste gas outlet end, and is in communication with the exhaust end. The inlet end of the second molecular sieve tank 3 is in communication with another gas outlet end. In addition, during the desorption process, the inlet end of the second molecular sieve tank 3 serves as a waste gas outlet end, and is in communication with the exhaust end. The first molecular sieve tank 2 and the second molecular sieve tank 3 may be arranged side by side, and both include a first sieve plate 614. A molecular sieve is laid in the first sieve plate 614, and the molecular sieve is configured to adsorb nitrogen in the air to generate medical oxygen. Referring to FIG. 21 and FIG. 22, the first sieve plate 614 may be horizontally provided in the first molecular sieve tank 2 and the second molecular sieve tank 3. The inlet end and the outlet end of the first molecular sieve tank 2/the second molecular sieve tank 3 are separated into two cavities, whereby the purity of oxygen can be ensured. Here, the molecular sieve may be wrapped in the first sieve plate 614 with a non-woven fabric.

By controlling the second control valve 1, it is possible to allow the second molecular sieve tank 3 to be in a desorption process while the first molecular sieve tank 2 is in an adsorption process. Two molecular sieve tanks operate alternately to achieve continuous oxygen generation, ensuring the oxygen generation efficiency. The adsorption process includes: the first molecular sieve tank 2 or the second molecular sieve tank 3 is in a high pressure state, and the inlet end of the first molecular sieve tank 2 or the second molecular sieve tank 3 is in communication with the gas outlet end, so that the molecular sieve of the first molecular sieve tank 2 or the second molecular sieve tank 3 in which air enters rapidly absorbs nitrogen, generates oxygen of a high concentration that flows out through a first oxygen passage or a second oxygen passage. The desorption process includes: the first molecular sieve tank 2 or the second molecular sieve tank 3 is in a low pressure state, the inlet end of the first molecular sieve tank 2 or the second molecular sieve tank 3 is in communication with the exhaust end, and the outlet end of the first molecular sieve tank 2 or the second molecular sieve tank 3 is closed. Thus, when the desorption process and the adsorption process alternate, the inlet end of the first molecular sieve tank 2 is in communication with the inlet end of the second molecular sieve tank 3 under the control of the second control valve 1, thereby rapidly equalizing pressure and improving the oxygen generation efficiency.

The gas distribution plate 4 is fixed to the first molecular sieve tank 2 and the second molecular sieve tank 3. For example, the gas distribution plate 4 may be mounted on the first outlet end cover 613, and thus the outlet ends of the first molecular sieve tank 2 and the second molecular sieve tank 3 may be provided on the first outlet end cover 613, for example, a plurality of vent grooves are provided on the first outlet end cover 613 for oxygen output. Furthermore, the gas distribution plate 4 is provided with a first oxygen passage in communication with the outlet end of the first molecular sieve tank 2, and is also provided with a second oxygen passage in communication with the outlet end of the second molecular sieve tank 3. In order to avoid excessive pipeline connections, which would result in an increased risk points of air leakage, the gas distribution plate 4 may be an injection-molded piece of an integrated structure, ensuring the tightness of the first oxygen passage and the second oxygen passage, while simplifying the structure of the adsorption tower.

In an example, the first outlet end cover 613 may be provided with two vent grooves, one vent groove being in communication with the outlet end of the first molecular sieve tank 2, the other vent groove being in communication with the outlet end of the second molecular sieve tank 3. Accordingly, the first oxygen passage on the gas distribution plate 4 is in communication with one of the vent grooves, and the second oxygen passage on the gas distribution plate 4 is in communication with the other vent groove.

The first connection tube 5 is configured to communicate the first oxygen passage and the second oxygen passage.

The first pressure equalizing valve 6 is provided in the first connection tube 5 for regulating the unblocking/blocking between the first oxygen passage and the second oxygen passage. For example, the first pressure equalizing valve 6 may be a solenoid valve. The adsorption tower may further include a mounting clip 9. The mounting clip 9 is fixed to the gas distribution plate 4 for clamping the first pressure equalizing valve 6. The mounting clip 9 and the gas distribution plate 4 may be threadedly connected.

In an optional embodiment of the disclosure, the gas distribution plate 4 includes an integrated first spigot joint structure and second spigot joint structure. The first spigot joint structure is in communication with the first oxygen passage, the second spigot joint structure is in communication with the second oxygen passage, and the first spigot joint structure is in communication with the second spigot joint structure through the first connection tube 5. The spigot joint structure may be configured to directly mount pipelines or valves, thereby simplifying the structure of the adsorption tower and facilitating assembly or disassembly. The integrated structure reduces the quantity of external spigot joint structures, thereby further reducing the risk of air leakage from the adsorption tower. Thus, the oxygen generation efficiency of the adsorption tower can be improved. In the actual assembly process, the first connection tube 5 can be directly inserted and fixed on the spigot joint structure of the gas distribution plate 4.

In an optional embodiment of the disclosure, with reference to FIG. 21 and FIG. 23, the adsorption tower may further include a third oxygen storage tank 7 that is in communication with the first oxygen passage and the second oxygen passage for storing oxygen generated by the first molecular sieve tank 2 or second molecular sieve tank 3.

In this embodiment, a pipeline connection may be formed between the third oxygen storage tank 7 and the first oxygen passage, and between the third oxygen storage tank 7 and the second oxygen passage, so that the oxygen output from the first molecular sieve tank 2 and the second molecular sieve tank 3 can be continuously stored.

In an optional embodiment of the disclosure, with reference to FIG. 21 and FIG. 23, the gas distribution plate 4 may also include an integrated third spigot joint structure and fourth spigot joint structure.

The third spigot joint structure is in communication with the first oxygen passage, the fourth spigot joint structure is in communication with the second oxygen passage, and the third spigot joint structure in communication with the fourth spigot joint structure via a second connection tube 615. Further, at least one throttle bridge 8 is provided in the second connection tube 615. Thus, a nitrogen purge process can be added to the molecular sieve in the molecular sieve tank via the throttle bridge 8, so that the nitrogen in the molecular sieve can be completely desorbed, optimizing the performance of the adsorption tower.

In an optional embodiment of the disclosure, the first connection tube 5 and the second connection tube 615 are both made of medical grade material. For example, medical grade materials may be medical silicones, medical plastics and the like, which have good structural stability and good environmental properties.

In another embodiment, the outlet end of the first molecular sieve tank 2 and the outlet end of the second molecular sieve tank 3 are respectively provided with a second check valve 610 for further preventing backflow of oxygen flowing out of the first molecular sieve tank 2 and the second molecular sieve tank 3. The second check valve 610 may be mounted on a corresponding end cover of the first molecular sieve tank 2 or the second molecular sieve tank 3.

In an optional embodiment of the disclosure, with reference to FIG. 21, the adsorption tower may further include a gas distribution sealing gasket 611 provided on the first molecular sieve tank 2 and the second molecular sieve tank 3.

Specifically, the gas distribution sealing gasket 611 may be laid on the first outlet end cover 613. The gas distribution plate 4 is mounted on the gas distribution sealing gasket 611. The gas distribution sealing gasket 611 increases the connection tightness between the gas distribution plate 4 and the first molecular sieve tank 2/the second molecular sieve tank 3, thereby optimizing the sealing performance of the adsorption tower.

In the above-mentioned embodiments, those skilled in the art would have been able to add seals, such as sealing gaskets or sealing rings, to the connection between relevant components according to actual assembly scenarios so as to ensure the tightness performance of the adsorption tower. At the same time, it is also possible to mount a corresponding gas path spigot joint structure for the relevant components according to the actual assembly scenario so as to facilitate the connection between the components.

In addition, the inlet end and the oxygen output end of the adsorption tower can be equalized at the same time or can be equalized at different times, and the above-mentioned two equalization methods can be determined according to actual design scenarios.

The disclosure further provides a molecular sieve oxygen generator including any of the adsorption towers described above.

In summary, the adsorption tower includes the second control valve 1, the first molecular sieve tank 2, the second molecular sieve tank 3, the gas distribution plate 4, the first connection tube 5, and the first pressure equalizing valve 6. The second control valve 1 includes a gas inlet end, an exhaust end, and two gas outlet ends. The inlet end of the first molecular sieve tank 2 is in communication with one gas outlet end, and the inlet end of the second molecular sieve tank 3 is in communication with another gas outlet end. The inlet end of the first molecular sieve tank 2 is in communication with the inlet end of the second molecular sieve tank 3 under the control of the second control valve 1. The gas distribution plate 4 is fixed on the first molecular sieve tank 2 and the second molecular sieve tank 3, and is provided with a first oxygen passage in communication with the outlet end of the first molecular sieve tank 2, and is further provided with a second oxygen passage in communication with the outlet end of the second molecular sieve tank 3. The first connection tube 5 is in communication with the first oxygen passage and the second oxygen passage. The first pressure equalizing valve 6 is provided in the first connection tube 5 for regulating the unblocking/blocking between the first oxygen passage and the second oxygen passage. In the process of oxygen generation, both the inlet end and the oxygen output end of the adsorption tower can be equalized to increase the gas pressure in the molecular sieve tank, so that the molecular sieve can rapidly adsorb nitrogen in a high gas pressure state to improve the oxygen generation efficiency.

Various embodiments are described in the description in a progressive manner. Each embodiment focuses on the differences from other embodiments, and the same and similar parts between the various embodiments can be referred to as each other.

It is easy for technical personnel in this field to think that any combination of the above embodiments is feasible, so any combination between the above embodiments is an embodiment of the disclosure. However, due to space limitations, the description will not elaborate on each one here.

In the description provided herein, numerous specific details are set forth. However, it can be understood that embodiments of the disclosure can be practiced without these specific details. In some instances, well-known methods, structures, and techniques have not been shown in detail in order not to obscure the understanding of this description.

Similarly, it should be understood that in order to streamline the disclosure and assist in understanding one or more aspects of the disclosure, in the description of exemplary embodiments of the disclosure above, the various features of the disclosure are sometimes grouped together into a single embodiment, figure, or description thereof.

Moreover, those skilled in the art will appreciate that although some embodiments described herein include some but not other features included in other embodiments, combinations of features of different embodiments are meant to be within the scope of the disclosure and form different embodiments. For example, in the claims, any one of the claimed embodiments may be used in any combination.

The disclosure relates to the field of control technology for oxygen generation equipment, in particular to a control method of oxygen generation equipment, a control device, and a control system.

The molecular sieve oxygen generator can orderly control the compressed air to enter the molecular sieve tower for adsorption and desorption, and generate continuous high concentration oxygen. When the compressed air enters the molecular sieve tower, the high pressure air flow may cause an impact damage to the molecular sieve in the molecular sieve tower, and may also cause cascade differentiation of the molecular sieve in the molecular sieve tower, reducing the service life of the molecular sieve and thus reducing the service life of the oxygen generation equipment.

In the process of oxygen generation of the existing oxygen generation equipment, the adsorption parameters and desorption parameters are fixed and unchanged. When the user adopts a smaller oxygen flow for oxygen therapy, due to the unchanged adsorption and desorption parameters, the oxygen flow output from the molecular sieve tower will be reduced, while the flow of compressed air input into the molecular sieve tower will be unchanged, which will result in excessive air flow intensity of the compressed air in the molecular sieve tower, exacerbating the impact damage and cluster kinetic pulverization damage caused to the molecular sieve, and at the same time, due to the increase air flow intensity in the molecular sieve tower, the burden of the air compressor is also increased. Furthermore, the service life of the air compressor is affected, and the service life of the whole oxygen generation equipment is reduced.

The technical solutions in the embodiments of the disclosure will be described clearly and thoroughly in conjunction with the accompanying drawings in the embodiments of the disclosure. Apparently, the described embodiments are a part of the embodiments of the disclosure, rather than all the embodiments. Based on the embodiments of the disclosure, all other embodiments obtained by those skilled in the art without creative effort fall within the scope of the disclosure.

It should be understood that references throughout the description to "an embodiment" or "one embodiment" imply that specific features, structures, or characteristics related to the embodiment are included in at least one embodiment of the disclosure. Therefore, the terms "in an embodiment" or "in one embodiment" appearing throughout the entire description may not necessarily refer to the same embodiment. In addition, these specific features, structures, or characteristics can be combined in any suitable way in one or more embodiments.

In various embodiments of the disclosure, it should be understood that the sequence numbers of the following processes do not imply the order of execution. The execution order of each process should be determined by its function and internal logic, and should not constitute any limitation on the implementation process of the disclosure embodiments.

An embodiment of the disclosure provides a method for controlling oxygen generation equipment, which is applied to a control device. The control device is connected to the oxygen generation equipment. The oxygen generation equipment includes a first oxygen storage tank, a first solenoid valve, and a second solenoid valve. As shown in FIG. 4, the method may include steps described below.

At step 101, the oxygen pressure in the first oxygen storage tank is acquired.

In the oxygen generation process of the oxygen generation equipment, after the compressed air enters the molecular sieve tower of the oxygen generation equipment, nitrogen, carbon dioxide, etc. in the air are adsorbed by the molecular sieve in the molecular sieve tower, and the gas flowing out into the first oxygen storage tank is high purity oxygen. There is a positive correlation between the oxygen pressure in the first oxygen storage tank and the gas pressure in the molecular sieve tower. Therefore, the oxygen pressure in the first oxygen storage tank can indirectly reflect the magnitude of the gas pressure in the molecular sieve tower.

Specifically, a pressure sensor may be provided in the first oxygen storage tank for detecting the oxygen pressure in the first oxygen storage tank.

At step 102, when the oxygen pressure exceeds a preset oxygen pressure range, a first target control parameter corresponding to the first solenoid valve is determined, and/or a second target control parameter corresponding to the second solenoid valve is determined. The first solenoid valve is configured to introduce the air into the oxygen generation equipment, and introduce waste gas out of the oxygen generation equipment. The second solenoid valve is configured to introduce oxygen into the first oxygen storage tank.

Specifically, in the case where the oxygen pressure in the first oxygen storage tank exceeds the preset oxygen pressure range (for example, the preset oxygen pressure range may be 100 kPa-120 kPa), based on the relationship between the oxygen pressure in the first oxygen storage tank and the gas pressure in the molecular sieve tower, it can be determined that the gas pressure in the molecular sieve tower of the oxygen generation equipment also exceeds a preset gas pressure range. In this case, impact damage and cluster kinetic pulverization damage may occur to the molecular sieve in the molecular sieve tower, and the service life of the molecular sieve is accelerated to be reduced. Therefore, it is necessary to timely control the oxygen pressure within the preset oxygen pressure range when the oxygen pressure in the first oxygen storage tank exceeds the preset oxygen pressure range.

Specifically, the first solenoid valve is provided between the air compressor and the molecular sieve tower of the oxygen generation equipment, and is used for introducing the air into the oxygen generation equipment and guiding the waste gas out of the oxygen generation equipment. The second solenoid valve is provided between the molecular sieve tower and the first oxygen storage tank of the oxygen generation equipment, and is used for introducing oxygen from the molecular sieve tower to the first oxygen storage tank. Therefore, the oxygen pressure in the first oxygen storage tank can be regulated by controlling the operating state of the first solenoid valve and/or second solenoid valve. Specifically, the operating state of the solenoid valve can be controlled by regulating a corresponding control parameter of the solenoid valve. For regulating the oxygen pressure in the first oxygen storage tank, the operating states of the first solenoid valve and the second solenoid valve may be controlled simultaneously, or only the operating state of the first solenoid valve or the operating state of the second solenoid valve may be controlled. Note that the control parameter of the solenoid valve may be an opening time and a closing time of the solenoid valve, or an opening duration or a closing duration of the solenoid valve. The adsorption duration and the desorption duration of the oxygen generation equipment can be changed by regulating the control parameter of the first solenoid valve, and the pressure equalization duration of the oxygen generation equipment can be changed by regulating the control parameter of the second solenoid valve.

At step 103, the first control parameter corresponding to the first solenoid valve is regulated to be the first target control parameter, and/or the second control parameter corresponding to the second solenoid valve is regulated to be the second target control parameter, so that the oxygen pressure in the first oxygen storage tank is within the preset oxygen pressure range.

The first control parameter is an actual control parameter corresponding to the first solenoid valve, and the second control parameter is an actual control parameter corresponding to the second solenoid valve.

The first control parameter of the first solenoid valve is a current control parameter of the first solenoid valve, and the second control parameter is a current control parameter of the second solenoid valve. By regulating the control parameter corresponding to the first solenoid valve and/or the second solenoid valve, the oxygen pressure in the first oxygen storage tank can be changed to keep the oxygen pressure in the first oxygen storage tank within a preset oxygen pressure range, so that the gas pressure in the molecular sieve tower fluctuates within a stable range, delaying the service life of the molecular sieve tower, reducing the output gas resistance of the air compressor, lowering the load amount of the air compressor, and extending the service life of the air compressor.

According to an embodiment of the disclosure, when the oxygen pressure in the first oxygen storage tank exceeds a preset oxygen pressure range, a control parameter corresponding to the first solenoid valve and/or the second solenoid valve is regulated so as to change the operating state of the first solenoid valve and/or the second solenoid valve and stabilize the oxygen pressure in the first oxygen storage tank within the preset oxygen pressure range. In this way, the gas pressure in the oxygen generation equipment fluctuates within the preset range, reducing the impact damage caused by the high pressure gas to the oxygen generation equipment, and extending the service life of the oxygen generation equipment.

In an optional embodiment of the disclosure, prior to determining the first target control parameter corresponding to the first solenoid valve and/or determining the second target control parameter corresponding to the second solenoid valve, the method further includes:
determining a first control parameter corresponding to the first solenoid valve and/or a second control parameter corresponding to the second solenoid valve.

Specifically, in response to acquiring that the oxygen pressure in the first oxygen storage tank exceeds the preset oxygen pressure range, it can be determined that the current control parameter of the first solenoid valve and/or the second solenoid valve needs to be regulated so as to change the operating state of the first solenoid valve and/or the second solenoid valve.

According to the above-mentioned embodiment of the disclosure, when it is determined that the oxygen pressure in the first oxygen storage tank exceeds the preset oxygen pressure range, by determining a first control parameter corresponding to the first solenoid valve and/or a second control parameter corresponding to the second solenoid valve, current control parameters of first solenoid valve and the second solenoid valve can be obtained. Further, the first target control parameter corresponding to the first solenoid valve and the second target control parameter corresponding to the second solenoid valve are determined based on current control parameters of the first solenoid valve and the second solenoid valve, so as to regulate the oxygen pressure in the first oxygen storage tank.

In an optional embodiment of the disclosure, the oxygen generation equipment further includes an outlet port. Determining the first control parameter corresponding to the first solenoid valve and/or the second control parameter corresponding to the second solenoid valve includes:
acquiring an oxygen flow rate at the outlet port; and
determining a control parameter set corresponding to the oxygen flow rate according to the oxygen flow rate and a preset correspondence relationship between flow rates and control parameter sets, and the control parameter set included the first control parameter and the second control parameter.

Specifically, the control device is stored with a correspondence relationship between the control parameters of the first solenoid valve and the second solenoid valve and the oxygen flow rate at the outlet port of the oxygen generation equipment, namely, the preset correspondence relationship between flow rates and control parameter sets. The control parameters of the first solenoid valve and the second solenoid valve can be determined by the preset correspondence relationship between flow rates and control parameter sets and the oxygen flow rate at the outlet port of the oxygen generation equipment. When setting the preset correspondence relationship between flow rates and control parameter sets, the oxygen flow rate can be divided into a plurality of continuous oxygen flow rate intervals according to a plurality of preset thresholds, and for each oxygen flow rate interval, a control parameter set corresponding to the oxygen flow rate interval is set, and the control parameter set includes the control parameters of the first solenoid valve and the control parameters of the second solenoid valve. The preset correspondence relationship between flow rates and control parameter sets can be set according to experimental values of the oxygen generation equipment, which is not limited in the disclosure.

Therefore, when determining the first control parameter corresponding to the first solenoid valve and/or the second control parameter corresponding to the second solenoid valve, it is necessary to first obtain the oxygen flow rate at the outlet port of the oxygen generation equipment, and then according to the oxygen flow rate and the preset correspondence relationship between flow rates and control parameter sets, a control parameter set corresponding to the oxygen flow rate can be determined.

Specifically, when a user of the oxygen generation equipment regulates the oxygen flow rate at the outlet port, the control device can acquire the oxygen flow rate, determine an oxygen flow rate interval where the oxygen flow rate is located, and then query a control parameter set corresponding to the oxygen flow rate interval in a preset correspondence relationship between flow rates and control parameter sets, namely, control parameters of the first solenoid valve and second solenoid valve.

According to the above-described embodiment of the disclosure, the control parameters of the first solenoid valve and the second solenoid valve may be determined according to the oxygen flow rate at the outlet port of the oxygen generation equipment and the preset correspondence relationship between flow rates and control parameter sets. Thus, the operating states of the two solenoid valves in the oxygen generation equipment can be determined through the preset correspondence relationship between flow rates and control parameter sets, so as to realize the regulation of the oxygen pressure in the first oxygen storage tank and ensure that the oxygen pressure in the first oxygen tank fluctuates within a preset oxygen pressure range.

In an optional embodiment of the disclosure, the control device includes an oxygen pressure detection module, and the oxygen pressure detection module is connected to the pressure sensor provided in the first oxygen storage tank.

The oxygen pressure in the first oxygen storage tank is acquired by:
acquiring from the oxygen pressure detection module the oxygen pressure in the first oxygen storage tank detected by the pressure sensor.

According to the above-mentioned embodiment of the disclosure, a pressure sensor is provided on the first oxygen storage tank, the oxygen pressure detection module of the control device can detect the oxygen pressure in the first oxygen storage tank via the pressure sensor, so as to realize the real time monitoring of the oxygen pressure in the first oxygen storage tank. In this way, when the oxygen pressure exceeds a preset oxygen pressure range, the control device can timely regulate a control parameter corresponding to the solenoid valve in the oxygen generation equipment to change the operating state of the solenoid valve, so as to maintain the oxygen pressure in the first oxygen storage tank within a stable range.

In an optional embodiment of the disclosure, the control device includes an oxygen flow rate detection module, and the oxygen flow rate detection module is connected to a flow rate sensor provided on the outlet port.

The oxygen flow rate at the outlet port is acquired by:
acquiring, from the oxygen flow rate detection module, the oxygen flow rate at the outlet port detected by the flow rate sensor.

According to the above-mentioned embodiment of the disclosure, a flow rate sensor is provided at the outlet port, when a user regulates the oxygen flow rate at the outlet port of the oxygen generation equipment, a change in the oxygen flow rate can be detected timely, and according to the change in the oxygen flow rate, a control parameter set matching the current oxygen flow rate can be determined. Specifically, the determination can be performed according to the oxygen flow rate and a preset correspondence relationship between flow rates and control parameter sets. The operating state of the solenoid valve in the oxygen generation equipment can thus be regulated according to control parameters matching the current oxygen flow rate, ensuring that the oxygen pressure in the first oxygen storage tank remains within a stable range.

In an optional embodiment of the disclosure, the control device includes a solenoid valve control module that is connected to the first solenoid valve and the second solenoid valve, respectively.

The first control parameter corresponding to the first solenoid valve is regulated to be the first target control parameter, and/or the second control parameter corresponding to the second solenoid valve is regulated to be the second target control parameter by:
sending a first control instruction to the solenoid valve control module according to the first target control parameter, and controlling the solenoid valve control module to regulate the control parameter corresponding to the first solenoid valve according to the first target control parameter so as to regulate the operating state of the first solenoid valve; and/or
sending a second control instruction to the solenoid valve control module according to the second target control parameter, and controlling the solenoid valve control module to regulate the control parameter corresponding to the second solenoid valve according to the second target control parameter so as to regulate the operating state of the second solenoid valve.

Specifically, when the oxygen pressure in the first oxygen storage tank exceeds a preset oxygen pressure range, the solenoid valve of the oxygen generation equipment needs to be regulated to keep the oxygen pressure within the preset oxygen pressure range. The oxygen generation equipment includes a first solenoid valve and a second solenoid valve. Specifically, the first solenoid valve and the second solenoid valve can be regulated at the same time, or only the first solenoid valve is regulated, or only the second solenoid valve is regulated, so as to control the oxygen pressure in the first oxygen storage tank to be within a preset oxygen pressure range. While controlling the first solenoid valve and the second solenoid valve, the controller of the control device may be implemented by a solenoid valve control module. Specifically, when controlling the first solenoid valve, a first control instruction may be sent to the solenoid valve control module, and the solenoid valve control module may be controlled to regulate a control parameter corresponding to the first solenoid valve according to the first target control parameter; when controlling the second solenoid valve, a second control instruction may be sent to the solenoid valve control module, and the solenoid valve control module may be controlled to regulate a control parameter corresponding to the second solenoid valve according to the second target control parameter.

According to the above-described embodiment of the disclosure, by sending a control instruction to the solenoid valve control module, it is possible to control the solenoid valve in the oxygen generation equipment, and further control the gas pressure in the oxygen generation equipment.

In an optional embodiment of the disclosure, when the oxygen pressure exceeds a preset oxygen pressure range, the first control parameter corresponding to the first solenoid valve is regulated as the first target control parameter, and/or the second control parameter corresponding to the second solenoid valve is regulated as the second target control parameter by:
determining the first target control parameter and the second target control parameter when the oxygen pressure is greater than an upper limit of the preset oxygen pressure range; or
determining the first target control parameter and the second target control parameter when the oxygen pressure is less than a lower limit of the preset oxygen pressure range.

Specifically, when the oxygen pressure exceeds the preset oxygen pressure range, there are two cases, the first case is that the oxygen pressure is greater than the upper limit of the preset oxygen pressure range, and the second case is that the oxygen pressure is less than the lower limit of the preset oxygen pressure range. For the above two cases, it is necessary to regulate the control parameter corresponding to the solenoid valve in the oxygen generation equipment and change the operating state of the solenoid valve to keep the oxygen pressure in the first oxygen storage tank within the preset oxygen pressure range.

With regard to the first case, it is necessary to change the operating state of the first solenoid valve and/or the second solenoid valve by regulating the control parameter corresponding to the first solenoid valve and/or the second solenoid valve so as to reduce the adsorption duration characterized by the control parameter of the first solenoid valve and/or increase the air pressure equilibrium duration characterized by the control parameter of the second solenoid valve, and finally reduce the oxygen pressure in the first oxygen storage tank to be within the preset oxygen pressure range; for the second case, it is necessary to change the operating state of the first solenoid valve and/or the second solenoid valve by regulating the corresponding control parameter of the first solenoid valve and/or the second solenoid valve, so as to increase the adsorption duration characterized by the control parameter of the first solenoid valve and/or reduce the air pressure equalization duration characterized by the control parameter of the second solenoid valve, and finally increase the oxygen pressure in the first oxygen storage tank to within the preset oxygen pressure range.

According to the above embodiment of the disclosure, the first target control parameter and/or the second target control parameter are determined by determining the relationship between the oxygen pressure and the lower limit value/the upper limit value of the preset oxygen pressure range. The control of the operating state of the solenoid valve and thus the control of the gas pressure in the oxygen generation equipment are achieved.

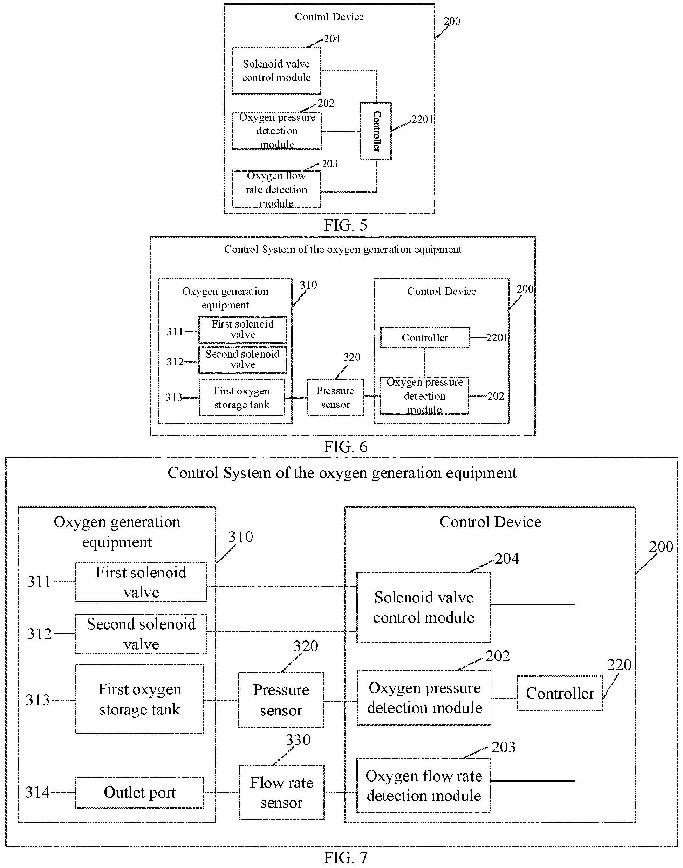

An embodiment of the disclosure further provides a control device connected to oxygen generation equipment. As shown in FIG. 5, the control device 200 includes a controller 2201 and an oxygen pressure detection module 202 connected to the controller 2201. The oxygen generation equipment includes a first oxygen storage tank, a first solenoid valve, and a second solenoid valve.

The oxygen pressure detection module 202 is configured to acquire oxygen pressure in the first oxygen storage tank.

The controller 2201 is configured to:
determine a first target control parameter corresponding to the first solenoid valve and/or determine a second target control parameter corresponding to the second solenoid valve when the oxygen pressure exceeds a preset oxygen pressure range; and regulate a first control parameter corresponding to the first solenoid valve to be the first target control parameter, and/or regulate a second control parameter corresponding to the second solenoid valve to be the second target control parameter, so that the oxygen pressure in the first oxygen storage tank is within the preset oxygen pressure range, the first control parameter is an actual control parameter corresponding to the first solenoid valve, and the second control parameter is an actual control parameter corresponding to the second solenoid valve.

The first solenoid valve is configured to introduce air into the oxygen generation equipment and introduce waste gas out of the oxygen generation equipment, and the second solenoid valve is configured to introduce oxygen into the first oxygen storage tank.

According to the control device provided by present disclosure, when the oxygen pressure detection module determines that the oxygen pressure in the first oxygen storage tank exceeds a preset oxygen pressure range, the controller regulates a control parameter corresponding to the first solenoid valve and/or the second solenoid valve so as to change the operating state of the first solenoid valve and/or the second solenoid valve so as to stabilize the oxygen pressure in the first oxygen storage tank within the preset oxygen pressure range. In this way, the gas pressure in the oxygen generation equipment fluctuates within the preset range, thereby reducing the impact damage caused by the high pressure gas to the oxygen generation equipment, and extending the service life of the oxygen generation equipment.

Optionally, as shown in FIG. 5, the control device 200 further includes an oxygen flow rate detection module 203 connected to the controller 2201.

The oxygen generation equipment further includes an outlet port:

The oxygen flow detection module 203 is configured to acquire the oxygen flow rate at the outlet port.

The controller 2201 is further configured to: determine a control parameter set corresponding to the oxygen flow rate according to the oxygen flow rate and a preset correspondence relationship between flow rates and control parameter sets, the control parameter set includes the first control parameter and the second control parameter.

Optionally, as shown in FIG. 5, the control device 200 further includes a solenoid valve control module 204 connected to the controller 2201.

The controller 2201 is further configured to: send a first control instruction to the solenoid valve control module according to the first target control parameter, and/or send a second control instruction to the solenoid valve control module according to the second target control parameter.

The solenoid valve control module 204 is configured to: receive the first control instruction, regulate a control parameter corresponding to the first solenoid valve as the first target control parameter according to the first control instruction; and/or receive the second control instruction, and regulate a control parameter corresponding to the second solenoid valve as the second target control parameter according to the second control instruction.

Optionally, the controller 2201 is further configured to: determine the first target control parameter and the second target control parameter when the oxygen pressure is greater than an upper limit of the preset oxygen pressure range; or determine the first target control parameter and the second target control parameter when the oxygen pressure is less than a lower limit value of the preset oxygen pressure range.

An embodiment of the disclosure provides a control system for oxygen generation equipment. As shown in FIG. 6, the system includes oxygen generation equipment 310, a control device 200, and a pressure sensor 320.

The oxygen generation equipment 310 includes a first solenoid valve 311, a second solenoid valve 312, and a first oxygen storage tank 313. The first solenoid valve 311 is configured to introduce air into the oxygen generation equipment 310 and guide waste gas out of the oxygen generation equipment 310. The second solenoid valve 312 is configured to introduce oxygen into the first oxygen storage tank 313.

The control device 200 includes a controller 2201 and an oxygen pressure detection module 202 connected to the controller 2201.

The pressure sensor 320 is provided on the first oxygen storage tank 313, and is connected to the oxygen pressure detection module 202.

When the oxygen pressure detection module 202 detects that the oxygen pressure in the first oxygen storage tank 313 exceeds a preset oxygen pressure range via the pressure sensor 320, the controller 2201 determines a first target control parameter corresponding to the first solenoid valve and/or determines a second target control parameter corresponding to the second solenoid valve; and regulates a first control parameter corresponding to the first solenoid valve to be the first target control parameter, and/or regulate a second control parameter corresponding to the second solenoid valve to be the second target control parameter, so that the oxygen pressure in the first oxygen storage tank is within the preset oxygen pressure range, the first control parameter is an actual control parameter corresponding to the first solenoid valve, and the second control parameter is an actual control parameter corresponding to the second solenoid valve.

In the control system for the oxygen generation equipment of the disclosure, when the oxygen pressure in the first oxygen storage tank exceeds a preset oxygen pressure range, a control parameter corresponding to the first solenoid valve and/or the second solenoid valve is regulated by the control device, so as to change the operating state of the first solenoid valve and/or the second solenoid valve, thereby stabilizing the oxygen pressure in the first oxygen storage tank within the preset oxygen pressure range. In this way, the gas pressure in the oxygen generation equipment fluctuates within the preset range, which reduces the impact damage caused by the high-pressure gas to the oxygen generation equipment, and extends the service life of the oxygen generation equipment.

Optionally, as shown in FIG. 7, the control system further includes a flow rate sensor 330.

The oxygen generation equipment 310 further includes an outlet port 314.

The control device 200 further includes an oxygen flow rate detection module 203 connected to the controller 2201.

The flow rate sensor 330 is provided on the outlet port 314, and is connected to the oxygen flow rate detection module 203.

The oxygen flow rate detection module 203 is configured to regulate the oxygen flow rate at the outlet port 314 detected by the flow rate sensor 330.

The controller 2201 is configured to determine a control parameter set corresponding to the oxygen flow rate according to the oxygen flow rate at the outlet port 314 acquired by the oxygen flow rate detection module 203 and a preset correspondence relationship between flow rates and control parameter sets. The control parameter set includes the first control parameter and the second control parameter.

Optionally, as shown in FIG. 7, the control device 200 further includes a solenoid valve control module 204 connected to the controller 2201.

The solenoid valve control module 204 is connected to the first solenoid valve 311 and the second solenoid valve 312, respectively.

The solenoid valve control module 204 is configured to: receive a first control instruction sent by the controller 2201, and regulate a control parameter corresponding to the first solenoid valve 311 as the first target control parameter according to the first control instruction; receive a second control instruction sent by the controller 2201, and regulate a control parameter corresponding to the second solenoid valve 312 as the second target control parameter according to the second control instruction.

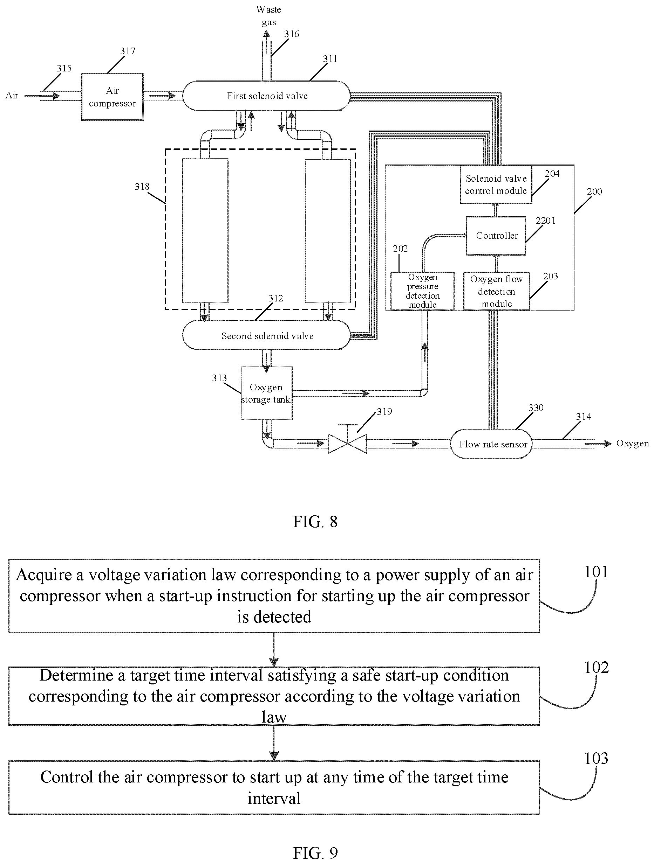

Optionally, as shown in FIG. 8, the oxygen generation equipment further includes an inlet port 315, a waste gas exhaust port 316, an air compressor 317, a molecular sieve tower 318, and a flow rate regulation assembly 319.

The first solenoid valve 311 is provided between the air compressor 317 and the molecular sieve tower 318, and the second solenoid valve 312 is provided between the molecular sieve tower 318 and the first oxygen storage tank 313.

A first port of the first solenoid valve 311 is connected to a first port of the air compressor 317, a second port of the first solenoid valve 311 is connected to the waste gas exhaust port 316, and a third port of the first solenoid valve 311 is connected to a first port of the molecular sieve tower 318. The first solenoid valve 311 is configured to introduce compressed air from the air compressor 317 into the molecular sieve tower 318 and guide waste gas out of the molecular sieve tower 318.

A second port of the air compressor 317 is connected to the inlet port 314. The air compressor 317 is configured to compress air entering the air compressor 317 from the inlet port 314.

A first port of the second solenoid valve 312 is connected to a second port of the molecular sieve tower 318, and a second port of the second solenoid valve 312 is connected to a first port of the first oxygen storage tank 313. The second solenoid valve 312 is configured to introduce oxygen from the molecular sieve tower 318 to the first oxygen storage tank 313.

A first port of the flow rate regulation assembly 319 is connected to a second port of the first oxygen storage tank 313, and a second port of the flow rate regulation assembly 319 is connected to the outlet port 314. The flow rate regulation assembly 319 is configured to regulate the oxygen flow rate at the outlet port 314.

Specifically, in the oxygen generation process, air enters the air compressor 317 from the inlet port 315. The air compressed by the air compressor 317 passes through the first solenoid valve 311 and enters the molecular sieve tower 318. Nitrogen, carbon dioxide, etc. in the air are adsorbed by the molecular sieve in the molecular sieve tower 318. Optionally, the quantity of the molecular sieve towers 318 may be multiple. For example, two molecular sieve towers 318 may be provided, and both of the two molecular sieve towers 318 are connected to the third port of the first solenoid valve 311, and both are connected to the first port of the second solenoid valve 312. The gas flowing out of the molecular sieve tower 318 through the second solenoid valve 312 into the first oxygen storage tank 313 is high purity oxygen. The waste gas is discharged from the waste gas exhaust port 316 during the desorption process of the molecular sieve tower 318. Oxygen in the first oxygen storage tank 313 may be discharged from the outlet port 314, and the flow rate regulation assembly 319 may control the flow rate of oxygen out of the outlet port 314.

An embodiment of the disclosure further provides a computer readable storage medium storing with a computer program that, when executed by a processor, implements the respective processes of the embodiments of the control method of the oxygen generation equipment described above, and can achieve the same technical effects. In order to avoid repetition, the description thereof will not be repeated.

The disclosure relates to the field of safe start-up control technology, in particular to a method for controlling an air compressor, a control device, and an oxygen generator.

With the continuous improvement of people's living standards, the demand for health is gradually increasing, and oxygen therapy will gradually become an important means of family and community-based rehabilitation. A molecular sieve oxygen generator uses an oil-free compressor as the power and uses a molecular sieve as an adsorption medium. Through the coordination of control valves and other components, the oxygen and nitrogen in the air are separated, ultimately obtaining high concentration oxygen.

The existing molecular sieve oxygen generators usually start up the air compressor by directly controlling a relay to start up the air compressor. This start-up method is simple, but the output voltage of the alternating current power supply at the start-up moment of the air compressor may be any voltage between the positive and negative peak voltages of the alternating current power supply. When the start-up moment occurs at the peak voltage position of the power supply, the current at the start-up moment is relatively large, which generates an impact on other equipment using the power supply, and may also generate a mechanical impact on the air compressor.

The technical solutions in the embodiments of the disclosure will be described clearly and thoroughly in conjunction with the accompanying drawings in the embodiments of the disclosure. Apparently, the described embodiments are a part of the embodiments of the disclosure, rather than all the embodiments. Based on the embodiments of the disclosure, all other embodiments obtained by those skilled in the art without paying creative effort fall within the scope of the disclosure.

An embodiment of the disclosure provides a method for controlling an air compressor, applied to a control device in an oxygen generator. The oxygen generator includes the air compressor and the control device, and the air compressor is connected to the control device. As shown in FIG. 9, the method may include steps described below.

At step 101, a voltage variation law corresponding to a power supply of an air compressor is acquired when a start-up instruction for starting up the air compressor is detected.

In this embodiment, the air compressor and the control device are deployed in an oxygen generator. The oxygen generator may include a trigger module, which may be a separate module or provided in the control device. The start-up instruction may be an instruction sent by the user through the trigger module, which may be a key or other form when the user needs to use the oxygen generator. When it is required to start up the oxygen generator, the user executes a corresponding start-up operation on the trigger module, and the trigger module generates a start-up instruction.

Upon detecting the start-up instruction, the control device acquires a voltage variation law corresponding to the power supply and does not directly control the start-up of the air compressor, preventing the air compressor from starting up at a peak voltage position of the power supply.

At step 102, a target time interval satisfying a safe start-up condition corresponding to the air compressor is determined according to the voltage variation law.

Specifically, the power supply of the air compressor is an alternating current power supply, and then according to the voltage variation law, the period and peak voltage of the power supply can be determined. Thus, a target time interval for satisfying the safe start-up condition corresponding to the air compressor can be determined, wherein the safe start-up condition can be that the voltage when the air compressor is started is less than a preset safe voltage.

At step 103, the air compressor is controlled to start up at any time of the target time interval.

After the target time interval is determined, the safe start-up condition of the air compressor may be satisfied at any time within the target time interval, and therefore, the air compressor may be controlled to start up at any time of the target time interval.

According to the embodiments of the disclosure, by acquiring a voltage variation law of a power supply corresponding to an air compressor when a starting instruction of the air compressor is detected, a target time interval for starting up the air compressor is determined, and the air compressor is controlled to start up at any time within the target time interval. It is possible to prevent the air compressor from starting up at the voltage peak position of the power supply, reducing the mechanical impact on the air compressor at the start-up moment and the impact on other equipment using the power supply, and extending the service life of the air compressor.

In an optional embodiment of the disclosure, after the air compressor is controlled to start up at any time of the target time interval, the method further includes:
monitoring an operating current of the air compressor and an output voltage of the power supply;
controlling the air compressor to shut down when the operating current exceeds a preset current threshold and/or the output voltage exceeds a preset voltage threshold.

Specifically, after the air compressor is controlled to start up at any time of the target time interval, the air compressor enters an operating state, and at this time, in order to ensure the normal operation of the air compressor, the control device needs to perform real-time monitoring on the operating current of the air compressor and the output voltage of the power supply. The air compressor needs to be shut down when the operating current exceeds a preset current threshold and/or the output voltage exceeds a preset voltage threshold. For example, the preset current threshold may be 1.5 times the rated current of the air compressor and the preset voltage may be 1.15 times the rated voltage.

According to the above-mentioned embodiment of the disclosure, by monitoring the operating current and the output voltage of the power supply during the operation of the air compressor, it is possible to timely control the air compressor to be shut down when the operating current exceeds a preset current threshold value, and/or when the output voltage exceeds a preset voltage threshold value, so as to prevent damage to the air compressor caused by an instantaneous high current or high voltage.

In an optional embodiment of the disclosure, the control device is further connected to a display screen and/or a speaker, and after the control of the air compressor is shut down, the method further includes:
sending a display control instruction to the display screen to cause the display screen to display prompt information for indicating that the air compressor is shut down, and/or sending a play control instruction to the speaker to cause the speaker to play prompt information for indicating that the air compressor is shut down.

After the control device controls the air compressor to be shut down, the control device also needs to send a display control instruction to a display screen, and/or send a play control instruction to a speaker, so that the display screen displays prompt information for indicating that the air compressor is shut down, and/or the speaker plays prompt information for indicating that the air compressor is shut down, so that a user using the oxygen generator can timely be reminded that the current air compressor has stopped working according to the prompt information.

According to the above-mentioned embodiments of the disclosure, prompt information for indicating that the air compressor is shut down is displayed or played to a user via a display screen or a speaker, so that the user can be reminded that the current air compressor has stopped working timely, and the user can know that the air compressor in the current oxygen generator has stopped working timely and prepares for standby oxygen timely, preventing influence on the user and improving the user experience.

In an optional embodiment of the disclosure, the control device includes a detection module. The detection module includes a voltage acquisition unit and a current acquisition unit.

The monitoring an operating current of the air compressor and an output voltage of the power supply, includes:
monitoring an operating current of the air compressor by the current acquisition unit, and monitoring the output voltage of the power supply by the voltage acquisition unit.

The current acquisition unit is connected to the air compressor for acquiring the operating current of the air compressor.

The voltage acquisition unit is connected to the power supply for acquiring an output voltage of the power supply.

A current acquisition unit for acquiring an operating current of the air compressor and a voltage acquisition unit for acquiring an output voltage of the power supply are provided in the control device. Specifically, the current acquisition unit is connected to the air compressor and is arranged in a power supply loop composed of the air compressor and a power supply. The voltage acquisition unit is connected to the power supply and is arranged at an output end of the power supply. The control device may monitor the operating current of the air compressor and the output voltage of the power supply through the current acquisition unit and the voltage acquisition unit.

According to the above-mentioned embodiment of the disclosure, by providing the voltage acquisition unit and the current acquisition unit in the control device, the operating current of the air compressor and the output voltage of the power supply can be monitored in real-time to prevent damage to the air compressor caused by an instantaneous high current or high voltage during the operation of the air compressor.

In an optional embodiment of the disclosure, the air compressor, the power supply, and the relay are connected in series to form a power supply loop. Said controlling the air compressor to start up at any time during the target time interval includes:
determining a first time interval corresponding to the relay according to the target time interval and a pull-in duration of the relay, wherein the pull-in duration is the duration during which the relay switches from an open state to a closed state, and any moment in the first time interval is a start-up moment during which the relay switches from an open state to a closed state; and
controlling the relay to close at a first moment during the first time interval to turn on the power supply loop at a second time corresponding to the target time interval, and start-up the air compressor at the second time; wherein the time interval between the first moment and the second moment is the pull-in duration, the first moment is any moment of the first time interval, and the first moment is before the second moment.

Specifically, the start-up control of the air compressor can be achieved by controlling the relay to close. Considering that it takes a certain duration for the relay to start closing until the relay is fully closed when the relay receives a control instruction to close when controlling the air compressor to start up at a second moment, it is necessary to close the relay at the first moment so that the air compressor can start-up at the second moment, wherein the time interval between the first moment and the second moment is the pull-in duration of the relay.

The first time interval corresponding to the relay is a time interval obtained by translating the pull-in duration of the relay forward from the target time interval. Therefore, the duration of the first time interval is equal to the duration of the target time interval, the time interval between the start-up time of the first time interval and the start-up time of the target time interval is the pull-in duration, and the time interval between the end time of the first time interval and the end time of the target time interval is the pull-in duration.

According to the above-mentioned embodiment of the disclosure, the first time interval corresponding to the relay is determined by the pull-in duration of the relay and the target time interval, so that the air compressor can be started up at the second moment after the relay is closed at the first moment, and the time interval between the first moment and the second moment is the pull-in duration of the relay, and the pull-in duration of the relay is prevented from affecting the start-up time of the air compressor, resulting in the case where the air compressor cannot be started safely.

In an optional embodiment of the disclosure, the power supply outputs an alternating voltage. Said determining a target time interval for satisfying a safe start-up condition corresponding to the air compressor according to the voltage variation law includes:
determining voltage state information according to the voltage variation law, wherein when an output voltage of the power supply is positive, the voltage state information is a first preset value, and when the output voltage is negative, the voltage state information is a second preset value;
according to the voltage state information, determining a target moment when the voltage state information changes for the first time after the start-up instruction is detected, wherein the target moment is a moment when the first preset value changes to the second preset value, or the target moment is a moment when the second preset value changes to the first preset value;
determining a third moment and a fourth moment according to the target moment and a preset duration, wherein the target moment and the third moment are in intervals by the preset duration, and the target moment and the fourth moment are in intervals by the preset duration, and the third moment, the target moment and the fourth moment are arranged in sequence; and
determining a time interval between the third time and the fourth time as the target time interval according to the third time and the fourth time.

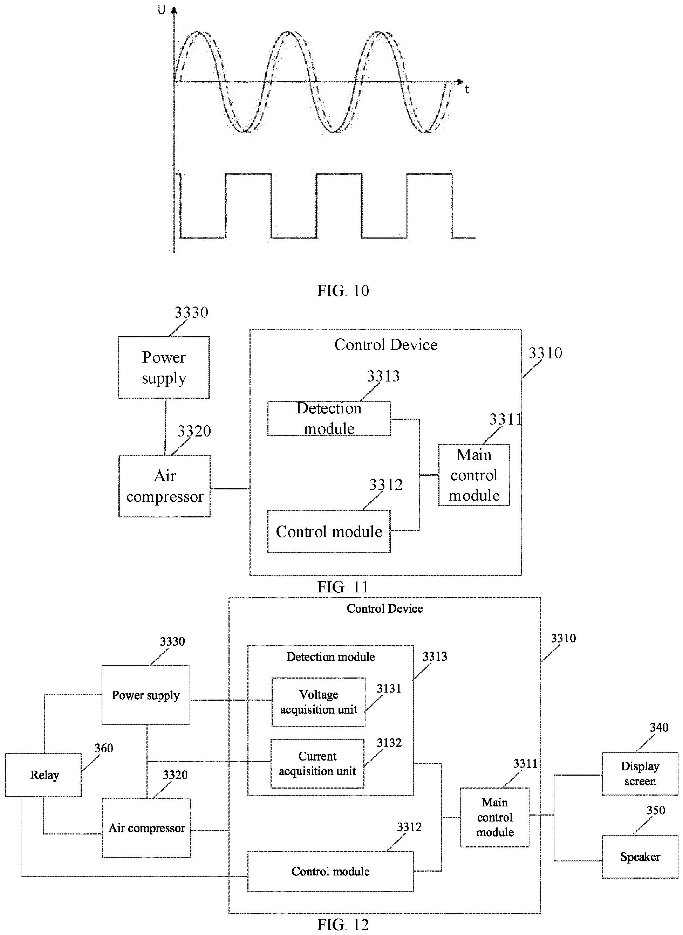

Specifically, as shown in FIG. 10, the power supply is a sinusoidal alternating current. The value of the voltage state information corresponding to the power supply is determined by the positive and negative of the output voltage of the power supply. When the output voltage of the power supply is positive, the voltage state information is a first preset value (corresponding to a low level). When the output voltage of the power supply is negative, the voltage state information is a second preset value (corresponding to a high level). For example, the first preset value can be 0, and the second preset value can be 1. It should be noted that the dotted line in FIG. 10 is the output voltage of the power supply detected by the control device. Considering that it takes a certain time (for example, 570 us) for the control device to detect and transmit the output voltage of the power supply, there is a time delay in the output voltage detected by the control device, and therefore the solid line in FIG. 10 is the actual value of the output voltage of the power supply. The determination of the voltage state information is based on the output voltage represented by the solid line in FIG. 10.

The voltage state information can be determined through a voltage variation law, and then a target moment can be determined when the voltage state information changes for the first time after the start-up instruction is detected. The target moment is a moment when the output voltage of the power supply first crosses a zero point after the start-up instruction is detected by the control device. The output voltage of the power supply is zero at the target moment. In order to ensure the safe start-up of the air compressor, a safe start-up condition needs to be satisfied, wherein the safe start-up condition is that at the start-up moment of the air compressor, the output voltage of the power supply is less than a preset safe voltage. According to the preset safe voltage and voltage variation law, the preset duration can be further determined. An output voltage corresponding to a third moment of a preset duration before the target moment is equal to the preset safe voltage, and the output voltage corresponding to the fourth moment of the preset duration after the target moment is equal to the preset safe voltage. Thus, the interval between the third time and the fourth time can be determined as the target time interval. At any time within the target time interval, the output voltage of the power supply is less than the preset safe voltage.

According to the above-mentioned embodiment of the disclosure, the output voltage of the power supply in the determined target time interval satisfies the condition for the safe start-up of the air compressor by the preset duration and the target moment when the voltage state information changes for the first time after the start-up instruction. Thus, the voltage of the air compressor at the start-up is ensured to be less than the preset safe voltage, reducing the mechanical impact on the air compressor at the start-up instant and the impact on other equipment using the power supply, and extending the service life of the air compressor.

An embodiment of the disclosure further provides a control device. As shown in FIG. 11, the control device 3310 is connected to an air compressor 3320. The control device 3310 includes:
a main control module 3311, and a control module 3312 and a detection module 3313 that are connected to the main control module 3311.

The detection module 3313 is configured to detect a start-up instruction to start up the air compressor 3320.

The main control module 3311 is configured to acquire, upon the detection module 3313 detects the start-up instruction, a voltage variation law corresponding to a power supply 3330 of the air compressor 3320, determine a target time interval satisfying a safe start-up condition corresponding to the air compressor 3320 according to the voltage variation law, and send a first control instruction to the control module 3312.

The control module 3312 is configured to control, upon receiving the first control instruction sent by the main control module 3311, the air compressor 3320 to start up at any moment of the target time interval.

In this embodiment, the air compressor 3320 and the control device 3310 are deployed in an oxygen generator. The oxygen generator may include a trigger module, which may be a separate module or provided in the control device 3310. The start-up instruction may be an instruction sent by the user through the trigger module, which may be a key or other form when the user needs to use the oxygen generator. When it is required to start up the oxygen generator, the user executes a corresponding start-up operation on the trigger module, and the trigger module generates a start-up instruction.

The main control module 3311, upon the detection module 3313 detects the start-up instruction, acquires a voltage variation law corresponding to the power supply, determines a target time interval satisfying a safe start-up condition corresponding to the air compressor 3320, and sends a first control instruction to the control module 3312. Since the main control module 3311 does not directly control the air compressor 3320 to start up after the detection module 3313 detects the start-up instruction, it is possible to prevent the air compressor 3320 from starting up at the peak voltage position of the power supply 3330.

Specifically, the power supply 3330 is an alternating current power supply, and the main control module 3311 can determine the period and peak voltage of the power supply 3330 according to the voltage variation law. Thus, a target time interval for satisfying a safe start-up condition corresponding to the air compressor 3320 can be determined, wherein the safe start-up condition can be that the voltage when the air compressor 3320 is started is less than a preset safe voltage.

The control module 3312 controls, upon receiving the first control instruction sent by the main control module 3311, the air compressor 3320 to start up at any moment of the target time interval. A safe start-up condition of the air compressor 3320 can be satisfied at any time within a target time interval, and therefore, the control module 3312 can control the air compressor 3320 to start up at any time within the target time interval.

According to the control device provided in the disclosure, upon the detection module 3313 detects a starting instruction of the air compressor 3320, the main control module 3311 acquires the voltage variation law of the power supply 3330 corresponding to the air compressor 3320, and determines a target time interval for starting up the air compressor 3320. The control module 3312 controls the air compressor to start up at any time within the target time interval. It is possible to prevent the air compressor 3320 from starting up at the voltage peak position of the power supply, reduce the mechanical impact on the air compressor 3320 at the start-up moment and the impact on other equipment using the power supply, and extend the service life of the air compressor 3320.

Optionally, as shown in FIG. 12, the detection module 3313 includes a voltage acquisition unit 3131 and a current acquisition unit 3132.

The voltage acquisition unit 3131 is arranged at an output end of the power supply 3330 and is configured to acquire an output voltage of the power supply.

The current acquisition unit 3132 is arranged in a power supply loop composed of the air compressor 3320 and the power supply 3330, and is configured to acquire an operating current of the air compressor 3320.

The main control module 3311 is also configured to determine, upon the control module 3312 controls the air compressor 3320 to start up, whether the output voltage exceeds a preset voltage threshold value and whether the operating current exceeds a preset current threshold value, and send a second control instruction to the control module 3312 in the case where the operating current exceeds the preset current threshold value and/or the output voltage exceeds the preset voltage threshold value.

The control module 3312 is also configured to control, upon receiving the second control instruction sent by the main control module 3311, the air compressor 3320 to be shut down.

Specifically, upon the control module 3312 controls the air compressor 3320 to start up at any moment of the target time interval, the air compressor 3320 enters an operating state. At this moment, in order to ensure the normal operation of the air compressor 3320, the main control module 3311 needs to perform real-time monitoring of the operating current of the air compressor 3320 and the output voltage of the power supply. When the operating current exceeds a preset current threshold value and/or the output voltage exceeds a preset voltage threshold value, a second control instruction needs to be sent to the control module 3312. The control module 3312 controls the air compressor 3320 to be shut down when the second control instruction is received.

According to the above-mentioned embodiment of the disclosure, by monitoring the operating current and the output voltage of the power supply during the operation of the air compressor, it is possible to timely control the air compressor to be shut down when the operating current exceeds a preset current threshold value, and/or when the output voltage exceeds a preset voltage threshold value, so as to prevent damage to the air compressor caused by an instantaneous high current or high voltage.

Optionally, as shown in FIG. 12, the control device 3310 is also connected to a display screen 340 or a speaker 350. The main control module 3311 is also configured to send, after the control module 3312 controls the air compressor 3320 to be shut down, a display control instruction to the display screen 340 to cause the display screen 340 to display prompt information for indicating that the air compressor is shut down, and/or a play control instruction to the speaker 350 to cause the speaker 350 to play prompt information for indicating that the air compressor is shut down.

After the control module 3312 controls the shutdown of the air compressor 3320, the main control module 3311 also needs to send a display control instruction to the display screen 340, and/or send a play control instruction to the speaker 350, so that the display screen 340 displays prompt information for indicating the shutdown of the air compressor 3320, and/or the speaker 350 plays prompt information for indicating the shutdown of the air compressor 3320, so that a user using the oxygen generator can timely know that the current air compressor 3320 has stopped working according to the prompt information.

According to the above-mentioned embodiments of the disclosure, prompt information for indicating that the air compressor 3320 is shut down is displayed or played to a user via a display screen 340 or a speaker 350, so that the user can be reminded that the current air compressor 3320 has stopped working timely, and prepares for standby oxygen timely, preventing influence on the user and improving the user experience. Optionally, as shown in FIG. 12, the air compressor 3320, the power supply 3330, and a relay 360 are connected in series to form a power supply loop.

The main control module 3311 is also configured to determine a first time interval corresponding to the relay 360 according to the target time interval and a pull-in duration of the relay 360, and send a third control instruction to the control module 3312. The pull-in duration is the duration for the relay 360 to switch from the open state to the closed state. Any moment in the first time interval is the start-up moment for the relay 360 to switch from the open state to the closed state.

The control module 3312 is also configured to control, upon receiving the third control instruction sent by the main control module 3311, the relay 360 to close at a first moment of the first time interval so as to enable the power supply loop to conduct at a second moment corresponding to the target time interval, and the air compressor 3320 to start up at the second moment. The time interval between the first moment and the second moment is the pull-in duration, the first moment is any moment of the first time interval, and the first moment is before the second moment.

Specifically, the control module 3312 may control the start-up of the air compressor 3320 by controlling the close of the relay 360. Considering that it takes a certain duration for the relay 360 to begin closing until the relay 360 is fully closed when the relay 360 receives the closed control instruction when controlling the air compressor 3320 to start up at the second moment, it is necessary to close the relay 360 at the first moment so that the air compressor 3320 can start-up at the second moment. The time interval between the first moment and the second moment is the pull-in duration of the relay.

The first time interval corresponding to the relay 360 is a time interval obtained by translating the pull-in duration of the relay forward from the target time interval. Therefore, the duration of the first time interval is equal to the duration of the target time interval, the time interval between the start-up time of the first time interval and the start-up time of the target time interval is the pull-in duration, and the time interval between the end time of the first time interval and the end time of the target time interval is the pull-in duration.

According to the above-mentioned embodiments of the disclosure, the main control module 3311 determines a first time interval corresponding to the relay 360 via a pull-in duration and a target time interval of the relay and sends a third control instruction to the control module 3312. Upon receiving the third control instruction, the control module 3312 controls the relay 360 to be closed at a first moment so that the air compressor 3320 can be started up at a second moment. The time interval between the first moment and the second moment is the pull-in duration of the relay. Furthermore, the pull-in duration of the relay can be prevented from affecting the start-up time of the air compressor 3320, which leads the air compressor 3320 to fail to start up safely.

Optionally, the main control module 3311 is also configured to determine voltage state information according to the voltage variation law; determine a target moment when the voltage state information changes for the first time after the start-up instruction is detected; determine a third moment and a fourth moment according to the target moment and a preset duration; and determine a time interval between the third moment and the fourth moment as the target time interval according to the third moment and the fourth moment;

When the output voltage of the power supply 3330 is positive, the voltage state information is a first preset value, and when the output voltage is negative, the voltage state information is a second preset value. The target moment is the moment when the first preset value changes into the second preset value, or the target moment is the moment when the second preset value changes into the first preset value. The target moment and the third moment are in intervals by the preset duration, and the target moment and the fourth moment are in intervals by the preset duration, and the third moment, the target moment, and the fourth moment are arranged in sequence.

The main control module 3311 may determine the voltage state information through the voltage variation law and then may determine a target moment when the voltage state information is first changed after detecting the start-up instruction. The target moment is a moment when the output voltage of the power supply 3330 first crosses a zero point after the start-up instruction is detected by the control device. The output voltage of the power supply 3330 is zero at the target moment. In order to ensure the safe start-up of the air compressor 3320, a safe start-up condition needs to be satisfied, wherein the safe start-up condition is that at the start-up moment of the air compressor 3320, the output voltage of the power supply 3330 is less than a preset safe voltage. According to the preset safe voltage and voltage variation law, the preset duration can be further determined. An output voltage corresponding to a third moment of a preset duration before the target moment is equal to the preset safe voltage, and the output voltage corresponding to the fourth moment of the preset duration after the target moment is equal to the preset safe voltage. Thus, the interval between the third time and the fourth time can be determined as the target time interval. At any time within the target time interval, the output voltage of the power supply 3330 is less than the preset safe voltage.

According to the above-mentioned embodiment of the disclosure, the main control module 3311 determines that the output voltage of the power supply 3330 in the target time interval satisfies the condition for the safe start-up of the air compressor 3320 by means of the preset time duration and the target the voltage state information changes for the first time after the start-up instruction. Thus, the voltage of the air compressor 3320 at the start-up is ensured to be less than the preset safe voltage, reducing the mechanical impact on the air compressor 3320 at the start-up instant and the impact on other equipment using the power supply 3330, and extending the service life of the air compressor 3320.

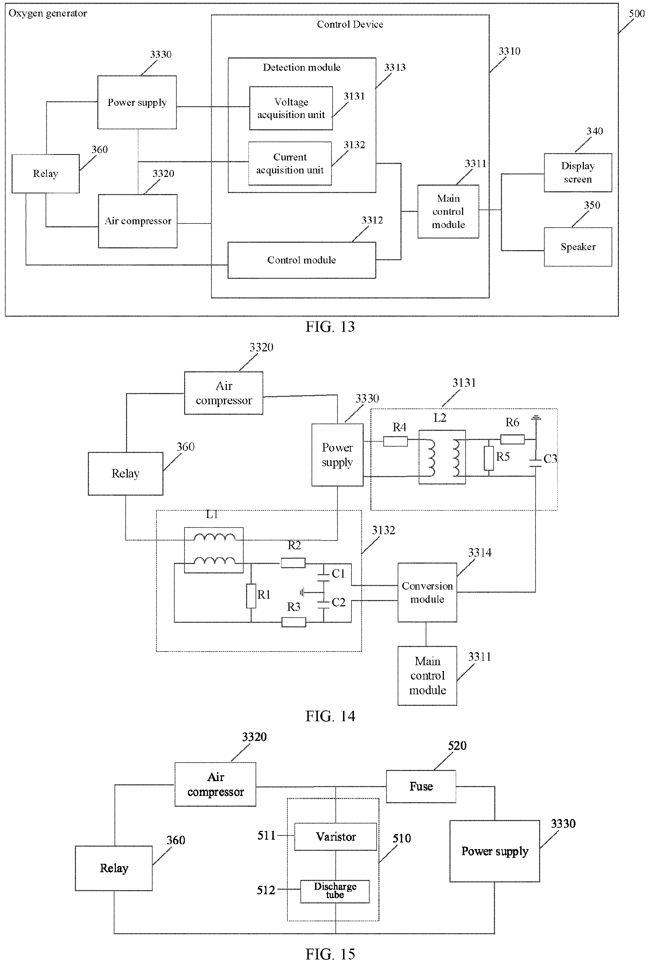

An embodiment of the disclosure further provides an oxygen generator. As shown in FIG. 13, the oxygen generator 500 includes an air compressor 3320 and a control device 3310 connected to the air compressor 3320.

The control device 3310 includes a main control module 3311, and a detection module 3313 and a control module 3312 that are connected to the main control module 3311.

When the detection module 3313 detects a start-up instruction for starting up the air compressor 3320, the main control module 3311 acquires a voltage variation law corresponding to the power supply 3330 of the air compressor 3320, and determines a target time interval satisfying a safe start-up condition corresponding to the air compressor 3320 according to the voltage variation law. The control module 3312 controls the air compressor 3320 to start up at any time of the target time interval.

Specifically, an air compressor 3320 and control device 3310 are provided in the oxygen generator 500. The control device 3310 is configured to control the air compressor 3320 to start up at a time when a safe start-up condition is satisfied.

According to the oxygen generator of the disclosure, by acquiring via the control device a voltage variation law of a power supply corresponding to an air compressor when a starting instruction of the air compressor is detected, a target time interval for starting up the air compressor is determined, and the air compressor is controlled to start up at any time within the target time interval. It is possible to prevent the air compressor from starting up at the voltage peak position of the power supply, reducing the mechanical impact on the air compressor at the start-up moment and the impact on other equipment using the power supply, and extending the service life of the air compressor.

Optionally, the detection module 3313 includes a voltage acquisition unit 3131 and a current acquisition unit 3132.

When the main control module 3311 monitors that the output voltage of the power supply 3330 exceeds a preset voltage threshold value via the voltage acquisition unit 3131, and/or monitors that the operating current of the air compressor 3320 exceeds a preset current threshold value via the current acquisition unit 3132, the control module 3312 controls the air compressor 3320 to be shut down.

Optionally, the oxygen generator 500 further includes a display screen 340 and/or a speaker 350.

The display screen 340 is configured to display prompt information for indicating that the air compressor 3320 is shut down after the control device 3310 controls the air compressor 3320 to be shut down;

The speaker 350 is configured to play prompt information for indicating that the air compressor 3320 is shut down after the control device 3310 controls the air compressor 3320 to be shut down.

Specifically, as shown in FIG. 14, a voltage acquisition unit 3131 is provided at the output end of a power supply 3330, and a current acquisition unit 3132 is provided in a power supply loop composed of an air compressor 3320, a relay 360, and the power supply 3330. The control device 3310 further includes a conversion module 3314. The voltage acquisition unit 3131 and the current acquisition unit 3132 are connected to the main control module 3311 via the conversion module 3314.

The current acquisition unit 3132 includes a first transformer L1, a first resistor R1, a second resistor R2, a third resistor R3, a first capacitor C1 and a second capacitor C2. A primary coil of the first transformer L1 is connected in series in a power supply loop, can acquire an operating current of the air compressor 3320, and induce a secondary coil of the first transformer L1. The secondary coil current can obtain an equivalent voltage signal acceptable to the conversion module 3314 through a sampling resistor (namely, the first resistor R1) and an RC low-pass filter circuit (namely, an RC circuit composed of the second resistor R2, the third resistor R3, the first capacitor C1, and the second capacitor C2). The voltage acquisition unit 3131 includes a second transformer L2, a fourth resistor R4, a fifth resistor R5, a sixth resistor R6, and a third capacitor C3. The fourth resistor R4 and the primary coil of the second transformer L2 are connected in series in a power supply loop, can acquire loop current, and induce on the secondary coil, and then an equivalent voltage signal which can be received by the conversion module 3314 is obtained through a sampling resistor (namely, the fifth resistor R5) and an RC low-pass filter circuit (namely, an RC circuit composed of the sixth resistor R6 and the third capacitor).

After receiving the equivalent voltage signal output by the current acquisition unit 3132, the conversion module 3314 obtains a current effective value through conversion, saves the same in a register of the conversion module 3314, and sends the same to the main control module 3311. The main control module 3311 can convert the current effective value into an operating current of the air compressor 3320 according to a preset calculation rule. After receiving the equivalent voltage signal output by the voltage acquisition unit 3131, the conversion module 3314 obtains a voltage effective value through conversion, saves the same in a register of the conversion module 3314, and sends the same to the main control module 3311. The main control module 3311 can convert the voltage effective value into an output voltage of the power supply 3330 according to a preset calculation rule.

Optionally, as shown in FIG. 15, the oxygen generator 500 further includes a relay 360.

The relay 360, the air compressor 3320, and the power supply 3330 constitute a power supply loop.

The main control module 3311 determines a first time interval corresponding to the relay 360 according to the target time interval and the pull-in duration of the relay 360. The pull-in duration is the duration for the relay 360 to switch from an open state to a closed state, and any moment in the first time interval is the start-up moment for the relay 360 to switch from an open state to a closed state. The control module 3312 controls the relay 360 to close at a first moment in the first time interval so that the power supply loop is conductive at a second moment corresponding to the target time interval, and the air compressor 3320 is started at the second moment. The time interval between the first moment and the second moment is the pull-in duration, the first moment is any moment of the first time interval, and the first moment is before the second moment.

Optionally, the main control module 3311 is also configured to determine voltage state information according to the voltage variation law, wherein when the output voltage of the power supply 3330 is positive, the voltage state information is a first preset value, and when the output voltage is negative, the voltage state information is a second preset value; and determine, according to the voltage state information, a target moment when the voltage state information changes for the first time after the start-up instruction is detected, wherein the target moment is a moment when the first preset value changes to the second preset value, or the target moment is a moment when the second preset value changes to the first preset value.

A third moment and a fourth moment are determined according to the target moment and a preset duration, wherein the target moment and the third moment are in intervals by the preset duration, and the target moment and the fourth moment are in intervals by the preset duration, and the third moment, the target moment and the fourth moment are arranged in sequence;

A time interval between the third time and the fourth time as the target time interval is determined according to the third time and the fourth time.

Optionally, as shown in FIG. 15, the oxygen generator 500 further includes a protection unit 510 connected in parallel at two ends of the air compressor 3320. The protection unit 510 includes a varistor 511 and a discharge tube 512 connected in series. A fuse 520 is connected in series on the connection line between the protection unit 510 and the power supply 3330.

During the operation of the air compressor 3320, if the peak voltage corresponding to the output voltage of the power supply 3330 exceeds a preset safe voltage threshold (for example, 750 V), the varistor 511 breaks down, the discharge tube 512 discharges, and the fuse 520 blows. The high voltage does not enter the after-stage circuit, i.e. the circuit containing the air compressor, thereby effectively protecting the after-stage circuit from damage.

An embodiment of the disclosure further provides a computer readable storage medium storing with a computer program that, when executed by a processor, implements the processes of the above-mentioned embodiments of the method for controlling an air compressor, and can achieve the same technical effects. In order to avoid repetition, the description thereof will not be repeated.

In the embodiments described above, they may be implemented in whole or in part by software, hardware, firmware, or any combination thereof. When implemented in software, it may be implemented in whole or in part as a computer program product. The computer program product includes one or more computer instructions. The computer program instructions, when loaded and executed on a computer, result in whole or in part, in processes or functions according to embodiments of the disclosure. The computer may be a general-purpose computer, a special-purpose computer, a computer network, or other programmable apparatus. The computer instructions may be stored in a computer-readable storage medium or transmitted from one computer-readable storage medium to another computer-readable storage medium. For example, the computer instructions may be transmitted from one website, computer, server, or data center to another website, computer, server, or data center by wire (e.g. coaxial cable, fiber optic, DSL) or wirelessly (e.g. infrared, wireless, microwave, etc.). The computer-readable storage medium can be any available medium that the computer can access or a data storage device such as a server or data center that contains one or more available media integrations. The usable medium may be a magnetic medium (e.g. floppy disk, hard disk, magnetic tape), an optical medium (e.g. DVD), or a semiconductor medium (e.g. Solid State Disk, SSD), etc.

It should be noted that relational terms herein such as "first" and "second", and the like, are used solely to distinguish one entity or operation from another entity or operation without necessarily requiring or implying any actual such relationship or order between such entities or operations. Further, the terms "include", "include", or any other variation thereof are intended to cover nonexclusive inclusion, so that a process, method, item, or device that includes a series of elements not only includes those elements, but also other elements that are not explicitly listed, or also include elements inherent in such a process, method, item, or device. An element proceeded by the sentence "includes ..." does not, without more constraints, preclude the existence of additional identical elements in the process, method, article, or device that includes the element.

Each embodiment described in the description is described in a related manner, reference being made to the same or similar elements throughout the various embodiments, and each embodiment being intended to cover variations from the other embodiments. In particular, for system embodiments, which are substantially similar to method embodiments, the description is relatively simple with reference to a partial description of method embodiments for the relevant points.

The above description is of preferred embodiments of the disclosure and is not intended to limit the scope of the disclosure. Any modifications, equivalent substitutions, improvements, etc. made within the spirit and principles of the disclosure are included within the scope of the disclosure.

## Claims

1. An oxygen generator, comprising an adsorption tower and an exhaust muffler, wherein the adsorption tower comprises a filling chamber for filling a molecular sieve, and a nitrogen exhaust port in communication with the filling chamber; the exhaust muffler comprises a gas inlet and a gas outlet, the gas inlet being in communication with the nitrogen exhaust port; and the exhaust muffler is configured to only allow a gas to flow unidirectionally from the gas inlet to the gas outlet.

2. The oxygen generator according to claim 1, wherein the exhaust muffler comprises a muting housing and a check valve assembly; the muting housing comprises a cavity; the gas inlet and the gas outlet are provided on the muting housing and in communication with the cavity; the check valve assembly is mounted in the cavity and in unidirectional communication with the gas inlet and the gas outlet, to allow the gas to only unidirectionally flow from the gas inlet to the gas outlet.

3. The oxygen generator according to claim 2, wherein the check valve assembly comprises a check valve core and a check valve housing; the check valve housing is formed with a gas passage for communicating the gas inlet and the gas outlet; the check valve core is disposed in the gas passage, and is configured to move in a forward direction to unblock the gas passage under a gas pressure from the gas inlet, and move in a reverse direction to block the gas passage when the gas pressure is lost.

4. The oxygen generator according to claim 3, wherein the check valve assembly further comprises an elastic member, and the check valve core is movably disposed in the gas passage, and is configured to move in the forward direction under the gas pressure from the gas inlet to unblock the gas passage, and move in the reverse direction under a restoring force of the elastic member to block the gas passage when the gas pressure is lost.

5. The oxygen generator according to claim 4, wherein one end of the check valve core comprises a plug, and the other end of the check valve comprises a mounting groove for mounting the elastic member, wherein the gas passage is provided with a vent for matching with the plug to block the gas passage and a stopper for stopping the elastic member at an opposite side of the check valve core to compress the elastic member when the check valve core moves in the forward direction.

6. The oxygen generator according to claim 3, wherein
the check valve housing comprises an inlet end housing and an outlet end housing, wherein the inlet end housing and the outlet end housing are detachably connected and together define the gas passage, the inlet end housing is provided with an entrance port communicating the gas inlet and the gas passage, and the outlet end housing is provided with an exit port communicating the gas outlet and the gas passage; and/or
the check valve assembly further comprises an exhaust barrel; one end of the exhaust barrel is in a closed shape, and the other end of the exhaust barrel is in an opened shape; an open end of the exhaust barrel is connected to an outlet end of the gas passage, and an exhaust hole is provided on a barrel wall of the exhaust barrel.

7. The oxygen generator according to any one of claims 2 to 6, wherein the muting housing comprises a barrel and two end covers respectively covering both ends of the barrel, wherein one of the end covers is provided with the gas inlet and is served as an inlet end cover and the other end cover is provided with the gas outlet and is served as an outlet end cover.

8. The oxygen generator according to claim 7, wherein the gas inlet comprises an inlet through hole formed at a center of the inlet end cover, and the gas outlet comprises a plurality of outlet through holes formed on the outlet end cover and arranged at intervals along a circumference of the outlet end cover.

9. The oxygen generator according to any one of claims 2 to 6, wherein
the exhaust muffler comprises a soundproof sponge, and the soundproof sponge is filled in the cavity and is provided with a mounting cavity for mounting the check valve assembly; and/or
the exhaust muffler comprises an inlet spigot joint, and the inlet spigot joint is mounted at the gas inlet.

10. The oxygen generator according to claim 1, further comprising an inlet filter, an inlet muffler and an air compressor that are in sequential communication with each other, and an oxygen storage tank, an oxygen filter, and a humidification cup that are in sequential communication with each other, wherein the adsorption tower comprises an gas inlet and an oxygen exhaust port in communication with the filling chamber; an air discharge port of the air compressor is in communication with the air inlet, and an oxygen inlet of the oxygen storage tank is in communication with the oxygen exhaust port.
